(19)

**Europäisches Patentamt**
**European Patent Office**
**Office européen des brevets**

(11) **EP 2 177 889 A1**

(12) **EUROPÄISCHE PATENTANMELDUNG**

(43) Veröffentlichungstag:
**21.04.2010 Patentblatt 2010/16**

(51) Int Cl.:
***G01M 3/32*** *(2006.01)*

(21) Anmeldenummer: **08018147.2**

(22) Anmeldetag: **16.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **H. Schreiner Test- und Sonderanlagen GmbH**
**85521 Ottobrunn (DE)**

(72) Erfinder: **De Simon, Mauro, Dr.**
**96317 Kronach (DE)**

(74) Vertreter: **Banzer, Hans-Jörg et al**
**Kraus & Weisert**
**Patent- und Rechtsanwälte**
**Thomas-Wimmer-Ring 15**
**80539 München (DE)**

(54) **Verfahren und Vorrichtung für eine Dichtheitsprüfung**

(57) Ein Verfahren zum automatischen Ermitteln wenigstens eines Parameters für eine Dichtheitsprüfung wird angegeben, wobei bei der Dichtheitsprüfung in einem Messzyklus ein Prüfling mit Druck (pt) beaufschlagt und ein einen Istdruck oder eine Änderung des Istdrucks in dem Prüfling repräsentierendes Messsignal erfasst wird, wobei der Messzyklus in Abhängigkeit von dem wenigstens einen Parameter (T1, T2, pf1) durchgeführt wird. Bei dem Verfahren wird eine Mehrzahl von Messzyklen an einem Testkörper durchgeführt, wobei zwischen wenigstens zwei Messzyklen der Mehrzahl von Messzyklen ein Wert (pf1, pf1+Δpf) eines Parameters geändert wird. Der wenigstens eine Parameter für die Dichtheitsprüfung (T1, T2, pf1) wird basierend auf Messsignalen (74, 78), die in der Mehrzahl von Messzyklen erfasst werden, festgelegt. Eine Vorrichtung zur Dichtheitsprüfung ist eingerichtet, um wenigstens einen Parameter für die Dichtheitsprüfung automatisch zu ermitteln.

Fig. 6

EP 2 177 889 A1

**Beschreibung**

Die vorliegende Erfindung betrifft Verfahren und Vorrichtungen, die bei einer Dichtheitsprüfung anwendbar sind. Insbesondere betrifft die vorliegende Erfindung Verfahren und Vorrichtungen für eine Dichtheitsprüfung, bei der ein Prüfling mit Druck beaufschlagt und anschließend ein Messsignal überwacht wird, das einen Istdruck in dem Prüfling oder eine Änderung des Istdrucks in dem Prüfling repräsentiert.

Eine Dichtheitsprüfung von Prüflingen ist in einer Vielzahl von Anwendungsgebieten erforderlich. Eine beispielhafte Anwendung ist die Dichtheitsprüfung von Fertigungsteilen, die bestimmte Dichtheitsanforderungen erfüllen müssen, wie Brennräume in Zylinderköpfen eines Verbrennungsmotors oder weitere Komponenten eines Verbrennungsmotors.

Die Dichtheitsprüfung kann mit einer Druckabfallmethode durchgeführt werden, bei der ein Prüfling mit Druck beaufschlagt und anschließend von einer Druckquelle getrennt wird. Nach einer kurzen Beruhigungszeit, während der dynamische Druckschwankungen abklingen können, die beispielsweise durch ein Schließen eines Sperrventils oder einen Temperaturausgleich zwischen Prüfling und Gas verursacht werden, wird in einem Messabschnitt ein Druck in dem Prüfling als Funktion der Zeit überwacht. Ein Leck im Prüfling führt zu einer Druckänderung im Prüfling als Funktion der Zeit. Aus der Druckänderung in dem Prüfling in einem Zeitintervall ist eine Leckrate ermittelbar.

Komplexere Varianten der Druckabfallmethode weisen eine größere Anzahl unterschiedlicher Abschnitte auf, um Leckraten genauer ermitteln zu können. So kann beispielsweise zunächst der Prüfling mit einem ersten Druck beaufschlagt werden, der von dem eigentlichen Prüfdruck verschieden ist. Die Druckbeaufschlagung kann dann zu dem gewünschten Prüfdruck geändert werden. Anschließend wird mit einem Sperrventil eine Fluidverbindung zwischen Prüfling und Druckquelle unterbrochen, und die nach einer Wartezeit auftretende Druckänderung wird über einen bestimmten Zeitraum erfasst und ausgewertet, um die Leckrate zu ermitteln.

Um die Leckrate mit hoher Genauigkeit ermitteln zu können, müssen unterschiedliche Parameter des Messzyklus der Dichtheitsprüfung, wie die Dauer der verschiedenen sequentiell durchgeführten Abschnitte des Messzyklus oder der erste Druck, mit dem der Prüfling beaufschlagt werden soll, geeignet gewählt werden. Werte für die unterschiedlichen Parameter, die gute Ergebnisse für die ermittelte Leckrate liefern, variieren in Abhängigkeit von der Konstruktion des Prüflings und sind daher häufig benutzerdefiniert vorgebbar. Die Einstellung geeigneter Parameter stellt häufig eine Herausforderung für den Benutzer dar. Eine konservative Wahl von Parametern, die beispielsweise lange Zeitdauern für die verschiedenen Abschnitte eines Messzyklus beinhaltet, kann zwar vernünftige Ergebnisse für die gemessenen Leckraten liefern, hat jedoch den Nachteil, dass die Dauer des Messzyklus länger wird.

Der Erfindung liegt die Aufgabe zugrunde, ein verbessertes Verfahren und eine verbesserte Vorrichtung anzugeben, das bzw. die bei zur Dichtheitsprüfung verwendbar ist. Insbesondere liegt der Erfindung die Aufgabe zugrunde, ein Verfahren und eine Vorrichtung anzugeben, mit dem bzw. mit der ein oder mehrere Parameter für den Ablauf eines Messzyklus der Dichtheitsprüfung automatisch ermittelbar ist bzw. sind.

Erfindungsgemäß wird diese Aufgabe gelöst durch ein Verfahren zum automatischen Ermitteln wenigstens eines Parameters für eine Dichtheitsprüfung, ein Verfahren zur Dichtheitsprüfung und eine Vorrichtung, wie sie in den unabhängigen Ansprüchen angegeben sind. Die abhängigen Ansprüche definieren vorteilhafte oder bevorzugte Ausführungsbeispiele.

Nach einem Aspekt wird ein Verfahren bereitgestellt, mit dem ein Parameter oder mehrere Parameter eines Messzyklus einer Dichtheitsprüfung automatisch durch ein Dichtheitsprüfgerät ermittelt wird bzw. werden. In dem Messzyklus wird ein Prüfling zunächst mit Druck beaufschlagt, und anschließend wird ein Messsignal erfasst, das einen Istdruck in dem Prüfling oder eine Änderung des Istdrucks in dem Prüfling repräsentiert. Der Messzyklus wird in Abhängigkeit von dem Parameter oder den Parametern durchgeführt. Beispiele für derartige Parameter sind die Zeitdauern verschiedener Abschnitte des Messzyklus, Drücke oder Druckänderungen, denen der Prüfling ausgesetzt wird, und dergleichen.

Bei einem Verfahren zum automatischen Ermitteln wenigstens eines Parameters für eine Dichtheitsprüfung wird eine Mehrzahl von Messzyklen an einem Testkörper, durchgeführt. Zwischen wenigstens zwei Messzyklen wird ein Wert eines Parameters geändert. Basierend auf Messsignalen, die in der Mehrzahl von Messzyklen erfasst werden, wird der wenigstens eine Parameter automatisch durch das Dichtheitsprüfgerät festgelegt.

Indem mehrere Messzyklen an einem Testkörper durchgeführt werden, wobei ein Parameter oder mehrere Parameter zwischen den Messzyklen geändert werden, können verschiedene Parameterwerte im Hinblick auf das resultierende Messsignal automatisch ausgetestet werden. Dadurch sind Parameterwerte automatisch ermittelbar, die für die nachfolgende Dichtheitsprüfung des Prüflings verwendet werden können.

Bevorzugt wird bei dem Verfahren eine Mehrzahl von Parametern des Messzyklus automatisch festgelegt. Die Mehrzahl von Parametern definiert den Ablauf eines Messzyklus, d.h. einer Messsequenz.

Bei dem Dichtheitsprüfgerät handelt es sich vorteilhaft um ein tragbares Gerät mit kompakter Bauform.

Vorteilhaft ist der Testkörper so gewählt, dass er eine zu dem Prüfling oder den Prüflingen, der oder die der Dichtheitsprüfung unterzogen werden soll bzw. sollen, identische Ausgestaltung aufweist. Weiter vorteilhaft ist die Leckrate des Testkörpers näherungsweise bekannt. Beispielsweise kann als Testkörper ein Fertigungsteil verwendet werden, das in einem unter Verwendung von Standardparameterwerten durchgeführten Messzyklus eine geringe Leckrate zeigt. Auf diese Weise können die Parameter spezifisch im Hinblick auf die konstruktive Ausgestaltung des Prüflings ausgewählt, im Idealfall optimiert werden.

Als Messsignal kann beispielsweise ein von einem Drucksensor erfasster Absolutdruck oder Differenzdruck und/oder eine von einem Durchflussmesser erfasste Durchflussrate verwendet werden. Der wenigstens eine Parameter kann auch basierend auf Messsignalen festgelegt werden, die jeweils sowohl ein Ausgangssignal eines Absolutdrucksensor als auch ein Ausgangssignal eines Durchflussmessers oder Differenzdrucksensors beinhalten.

Der wenigstens eine Parameter kann nach verschiedenen Kriterien festgelegt werden. Beispielsweise kann die Differenz zwischen einem Messsignal, das in einem Messzyklus erfasst wird, und einem Sollwert mit einer Maximalabweichung verglichen werden. Falls die Differenz kleiner als die Maximalabweichung ist, kann der entsprechende Satz von Parameterwerten, der bei dem Messzyklus verwendet wurde, als im Hinblick auf dieses Kriterium akzeptabler Parametersatz registriert werden. Alternativ oder zusätzlich kann eine Differenz zwischen zwei Messsignalen, die in wenigstens zwei Messzyklen erfasst werden, zwischen denen wenigstens ein Wert eines Parameters verändert wurde, mit einer Maximalabweichung verglichen werden. Ändert sich das Messsignal zwischen den Messzyklen geteilt durch die Änderung des Parameterwerts um weniger als die Maximalabweichung, kann der Satz von Parameterwerten, der bei einem der zwei Messzyklen verwendet wurde, als im Hinblick auf dieses Kriterium akzeptabler Parametersatz registriert werden. Die Differenz zwischen Messsignal und Sollwert bzw. zwischen zwei Messsignalen kann zu verschiedenen Zeitpunkten ermittelt und jeweils mit einer zulässigen Maximalabweichungen verglichen werden. Die Zeitpunkte können beispielsweise das Ende verschiedener Abschnitte des Messzyklus und/oder eine maximale zulässige Messzeit sein. Die Maximalabweichung ist vorgebbar, insbesondere benutzerdefiniert vorgebbar. Beispielsweise können Default-Werte für eine zulässige Maximalabweichung vorgesehen werden, die benutzerdefiniert anpassbar sind. Wenn eine Abweichung zwischen einem Messsignal und einem Sollwert ermittelt wird, kann auch der Sollwert benutzerdefiniert einstellbar sein, beispielsweise als Prüfdruck, bei dem die Dichtheitsprüfung durchgeführt werden soll.

Der Messzyklus kann eine erste Phase, in der eine Druckbeaufschlagung durch eine Druckquelle erfolgt, und eine zweite Phase, in der eine Fluidverbindung zu der Druckquelle abgesperrt ist, aufweisen. Der wenigstens eine Parameter kann eine Dauer der ersten Phase und/oder einen während der ersten Phase eingestellten Druck umfassen. Auf diese Weise können verschiedene Parameter der ersten Phase automatisch ermittelt werden, in der bei der Dichtheitsprüfung eine kontrollierte Druckbeaufschlagung des Prüflings erfolgt.

Die Festlegung des wenigstens einen Parameters kann im Hinblick auf verschiedene Kriterien erfolgen. Beispielsweise können die Messsignale, die für die Mehrzahl von Messzyklen erfasst werden, ausgewertet werden, um basierend auf den Messsignalen den wenigstens einen Parameter derart festzulegen, dass ein in einem Messzyklus, der mit dem festgelegten wenigstens einen Parameter durchgeführt wird, erfasstes Messsignal in der zweiten Phase stabil gegenüber kleinen Änderungen des wenigstens einen Parameters ist. Alternativ oder zusätzlich können die Messsignale, die für die Mehrzahl von Messzyklen erfasst werden, ausgewertet werden, um den wenigstens einen Parameter derart festzulegen, dass ein in einem Messzyklus, der mit dem festgelegten wenigstens einen Parameter durchgeführt wird, am Ende der ersten Phase eingestellter Druck im Wesentlichen einem vorgebbaren Prüfdruck entspricht. Alternativ oder zusätzlich können die Messsignale, die für die Mehrzahl von Messzyklen erfasst werden, ausgewertet werden, um den wenigstens einen Parameter derart festzulegen, dass in einem Messzyklus, der mit dem festgelegten wenigstens einen Parameter durchgeführt wird, für einen Testkörper mit bekannter Leckrate das Messsignal in der zweiten Phase mit einem für die bekannte Leckrate erwarteten Messsignal innerhalb einer vorgebbaren Maximalabweichung übereinstimmt.

Auf diese Weise kann der wenigstens eine Parameter im Hinblick auf verschiedene Kriterien, die alternativ oder kumulativ anwendbar sein können, ausgewählt werden, um beispielsweise eine hohe Stabilität des Messsignals gegenüber kleinen Abweichungen von Parameterwerten, eine gute Übereinstimmung mit dem benutzerdefiniert vorgebbaren Prüfdruck und/oder eine gute Übereinstimmung mit einer bekannten Leckrate zu erreichen. Die Festlegung der Parameter kann dabei unter der Zwangsbedingung erfolgen, dass die Gesamtdauer des Messzyklus, oder einer Phase des Messzyklus, eine vorgebbare Maximaldauer nicht überschreitet.

Die erste Phase kann einen ersten Abschnitt, in dem eine Druckbeaufschlagung mit einem ersten Druck erfolgt, und einen zweiten Abschnitt, in dem die Druckbeaufschlagung von dem ersten Druck zu einem Prüfdruck geändert wird, umfassen. Bei dieser Ausgestaltung des Messzyklus kann eine höhere Stabilität des Messsignals erreicht werden, da in der ersten Phase der Druck über eine Zwischenstufe auf den gewünschten Prüfdruck eingestellt wird. Der wenigstens eine Parameter kann den ersten Druck, eine Dauer des ersten Abschnitts und/oder eine Dauer des zweiten Abschnitts beinhalten. Auf diese Weise können die den Ablauf der ersten Phase bestimmenden Parameter automatisch ermittelt werden.

Die zweite Phase, in der der Prüfling bzw. der Testkörper von der Druckquelle abgekoppelt ist, um den Druckabfall in dem Prüfling bzw. Testkörper zu überwachen, kann zunächst einen Warte- oder Beruhigungsabschnitt und dann einen Messabschnitt aufweisen. Der Warteabschnitt erlaubt ein Abklingen von dynamischen Druckschwankungen und weiteren transienten Druckänderungen, die beispielsweise durch das Schließen eines Sperrventils am Ende der ersten Phase hervorgerufen werden. Der Messabschnitt ist der Abschnitt der zweiten Phase, für den das erfasste Messsignal zur Bestimmung der Leckrate ausgewertet werden soll. Der wenigstens eine Parameter kann eine Anfangszeit und/oder eine Endzeit des Messabschnitts umfassen. Auf diese Weise kann der Messabschnitt automatisch bestimmt werden.

Um die Anfangszeit und/oder die Endzeit des Messabschnitts festzulegen, kann eine Messunsichetheit eines Messsignals, das in einem Messzyklus der Mehrzahl von Messzyklen erfasst wird, für mehrere Zeitintervalle in der zweiten Phase ermittelt werden. Bei einer Ausgestaltung wird die Messunsicherheit für so viele Zeitintervalle ermittelt, bis eine Messunsicherheit in dem Zeitintervall bestimmten Gütekriterien genügt. Dieses Zeitintervall wird dann als Messabschnitt festgelegt. Die Bestimmung der Anfangszeit und/oder Endzeit des Messabschnitts kann erfolgen, nachdem die verschiedenen Parameter für die erste Phase des Messzyklus festgelegt wurden. Als Messsignal zur Bestimmung der Anfangszeit und/oder der Endzeit des Messabschnitts kann das unter Verwendung der für die erste Phase des Messzyklus festgelegten Parameter erfasste Messsignal herangezogen werden.

Die Anfangszeit und die Endzeit des Messabschnitts können so gewählt werden, dass die Endzeit unter der Zwangsbedingung minimiert wird, dass die Messunsicherheit kleiner als ein vorgebbarer Maximalwert ist. Für ein Zeitintervall kann die Messunsicherheit basierend auf einer Abweichung des Messsignals in dem Zeitintervall von einem besten linearen Fit an das Messsignal bestimmt werden. Zusätzlich kann ein nichtlinearer Fit an das Messsignal verwendet werden, um bei der automatischen Bestimmung des Messabschnitts zu berücksichtigen, dass bei Messabschnitten mit langen Zeitdauern nichtlineare Anteile in der Druck-Zeit-Abhängigkeit von größerer Relevanz werden können. Bei einer Ausgestaltung kann das Messsignal für die festgelegten Werte des ersten Drucks, der Dauer des ersten Abschnitts der ersten Phase und der Dauer des zweiten Abschnitts der ersten Phase bis zu einer einstellbaren maximal zulässigen Zeitdauer des Messzyklus erfasst werden, wobei eine nichtlineare Funktion an das dabei erfasste Messsignal angefittet wird. Für jedes der Zeitintervalle kann der nichtlineare Fit ausgewertet und bei der Bestimmung der Messunsicherheit für das jeweilige Zeitintervall berücksichtigt werden.

Bei einem Verfahren zur Dichtheitsprüfung einer Mehrzahl von Prüflingen nach einem Aspekt wird zunächst automatisch wenigstens ein Parameter für die Dichtheitsprüfung unter Verwendung des Verfahrens zum automatischen Ermitteln des wenigstens einen Parameters ermittelt. Anschließend wird ein Messzyklus für jeden Prüfling der Mehrzahl von Prüflingen mit den automatisch ermittelten Parametern durchgeführt. Bei dem Verfahren zur Dichtheitsprüfung kann der wenigstens eine Parameter für die Durchführung der Dichtheitsprüfung automatisch ermittelt und anschließend für die Dichtheitsprüfung einer Mehrzahl von Prüflingen verwendet werden.

Zum automatischen Ermitteln der Mehrzahl von Parametern kann ein Testkörper ausgewählt werden, der eine zu den Prüflingen identische Ausgestaltung und eine bekannte, insbesondere möglichst geringe Leckrate aufweist. Beispielsweise kann als Testkörper eines von mehreren Fertigungsteilen verwendet werden, das bei einer vorläufigen Dichtheitsprüfung eine geringe Leckrate aufweist.

Nach einem weiteren Aspekt wird eine Vorrichtung zur Dichtheitsprüfung angegeben, die zur automatischen Ermittlung wenigstens eines Parameters für die Dichtheitsprüfung eingerichtet ist. Die Vorrichtung umfasst eine Druckkontrolleinrichtung, eine Sensoreinrichtung und eine Recheneinrichtung. Die Druckkontrolleinrichtung ist eingerichtet, um eine Druckbeaufschlagung eines Prüflings zu steuern oder zu regeln. Beispielsweise kann die Druckkontrolleinrichtung einen Druckregler umfassen. Die Sensoreinrichtung ist eingerichtet, um ein Messsignal zu erfassen, das einen Istdruck oder eine Änderung des Istdrucks in dem Prüfling repräsentiert. Die Recheneinrichtung ist mit der Druckkontrolleinrichtung gekoppelt, um die Druckkontrolleinrichtung gemäß einem von wenigstens einem Parameter abhängigen Messzyklus anzusteuern. Die Recheneinrichtung ist weiterhin mit der Sensoreinrichtung gekoppelt, um das während des Messzyklus erfasste Messsignal auszuwerten und basierend auf dem erfassten Messsignal einen Wert eines Parameters des wenigstens einen Parameters zu ändern, und um die Druckkontrolleinrichtung zur Durchführung eines weiteren Messzyklus mit dem geänderten Parameter anzusteuern, um automatisch wenigstens einen Parameter für die Dichtheitsprüfung festzulegen.

Bei einer Ausgestaltung kann die Recheneinrichtung eingerichtet sein, um die Druckkontrolleinrichtung zur sequentiellen Durchführung einer Mehrzahl von Messzyklen anzusteuern, wobei eine Mehrzahl von Messsignalen erfasst wird, und wobei die Recheneinrichtung den wenigstens einen Parameter basierend auf den Messsignalen festlegt. Dabei kann jeweils zwischen aufeinanderfolgenden Messzyklen der Mehrzahl von Messzyklen der Wert wenigstens eines der Parameter geändert werden.

Die Vorrichtung kann einen mit einer Druckquelle zu verbindenden Anschluss und einen mit dem Prüfling bzw. Testkörper zu verbindenden Anschluss aufweisen, die jeweils mit der Druckkontrolleinrichtung gekoppelt sind. Die Druckkontrolleinrichtung kann verwendet werden, um den Prüfling kontrolliert mit Druck zu beaufschlagen, wobei der Druck von der Druckquelle bereitgestellt wird. Der Prüfling kann mit Überdruck oder mit Unterdruck beaufschlagt werden. Entsprechend kann die Druckquelle als positive oder negative Druckquelle ausgestaltet sein.

Die Sensoreinrichtung kann einen Absolutdrucksensor, einen Differenzdrucksensor und/oder einen Durchflussmesser aufweisen. Die Sensoreinrichtung kann auch mehrere Sensoren, beispielsweise einen Differenzdrucksensor in Kombination mit einem Absolutdrucksensor, umfassen.

Die Vorrichtung kann zur Durchführung des Verfahrens zum automatischen Ermitteln wenigstens eines Parameters für eine Dichtheitsprüfung eingerichtet sein. Insbesondere kann die Vorrichtung eingerichtet sein, um die in einer Mehrzahl von Messzyklen, die mit unterschiedlichen Parametern durchgeführt werden, erfassten Messsignale nach vorgebbaren Kriterien auszuwerten, um den wenigstens einen Parameter automatisch zu ermitteln. Der wenigstens eine Parameter kann beispielsweise Zeitdauern verschiedener Abschnitte oder Phasen eines Messzyklus oder einen bei der Druckbeaufschlagung des Prüflings eingestellten Solldruck umfassen.

Die Vorrichtung kann eingerichtet sein, um eine Zeitdauer des Messzyklus oder eine Zeitdauer eines Abschnitts des Messzyklus unter der Zwangsbedingung zu minimieren, dass vorgebbare Genauigkeitsanforderungen für die ermittelte Leckrate eingehalten werden.

Die Vorrichtung kann vorteilhaft als ein tragbares Gerät mit kompakter Bauform ausgebildet sein.

Die Vorrichtungen und Verfahren nach verschiedenen Ausführungsbeispielen der Erfindung können allgemein zur Dichtheitsprüfung eingesetzt werden. Beispielhafte Anwendungsfelder sind die Dichtheitsprüfung in der industriellen Fertigung. Jedoch sind die Ausführungsbeispiele der Erfindung nicht auf diese Anwendungen beschränkt.

Die Erfindung wird nachfolgend anhand von Ausführungsbeispielen unter Bezugnahme auf die beigefügte Zeichnung näher erläutert.

Fig. 1 ist eine schematische Blockdiagrammdarstellung einer Vorrichtung zur Dichtheitsprüfung nach einem Ausführungsbeispiel.

Fig. 2 zeigt einen beispielhaften Druckverlauf bei einem Messzyklus.

Fig. 3 ist eine Flussdiagrammdarstellung eines Verfahrens zur Dichtheitsprüfung nach einem Ausführungsbeispiel.

Fig. 4 ist eine Flussdiagrammdarstellung eines Verfahrens zum automatischen Ermitteln von Parametern für eine Dichtheitsprüfung nach einem Ausführungsbeispiel.

Fig. 5 veranschaulicht bei dem Verfahren von Fig. 4 anwendbare Kriterien.

Fig. 6 veranschaulicht weitere bei dem Verfahren von Fig. 4 anwendbare Kriterien.

Fig. 7 ist eine Flussdiagrammdarstellung einer Schrittabfolge bei einem Verfahren zum automatischen Ermitteln von Parametern für eine Dichtheitsprüfung nach einem Ausführungsbeispiel.

Fig. 8 veranschaulicht bei der Schrittabfolge von Fig. 7 anwendbare Kriterien.

Fig. 9 ist eine schematische Blockdiagrammdarstellung einer Vorrichtung zur Dichtheitsprüfung nach einem weiteren Ausführungsbeispiel.

Nachfolgend werden Ausführungsbeispiele der Erfindung näher erläutert. Die Merkmale der verschiedenen Ausführungsbeispiele können miteinander kombiniert werden, sofern dies in der nachfolgenden Beschreibung nicht ausdrücklich ausgeschlossen wird. Auch wenn einzelne Ausführungsbeispiele im Hinblick auf spezifische Anwendungen, beispielsweise im Kontext der Dichtheitsprüfung in der industriellen Fertigung, beschrieben werden, ist die vorliegende Erfindung nicht auf diese Anwendungen beschränkt.

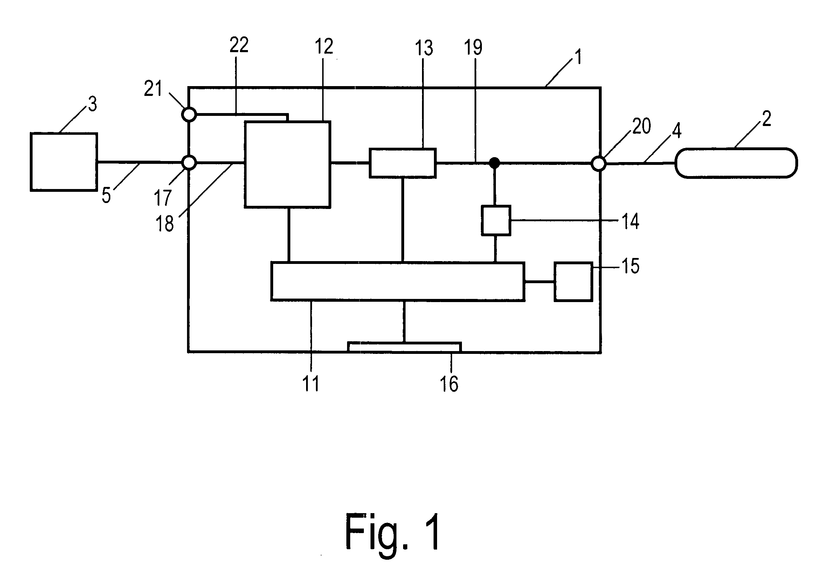

Fig. 1 ist eine schematische Darstellung einer Vorrichtung 1 zur Dichtheitsprüfung. Beispielhaft ist ein Fertigungsteil 2 oder sonstiges Objekt dargestellt, das ein auf Dichtheit zu prüfender Prüfling oder ein Testkörper ist, mit dem eine Mehrzahl von Parametern für die Dichtheitsprüfung automatisch ermittelt werden soll.

Die Vorrichtung 1 ist über eine Leitung 4 mit dem Fertigungsteil 2 und über eine Leitung 5 mit einer Druckquelle 3 verbunden. Ein Ende der Leitung 4 ist auf geeignete Weise gasdicht mit dem Fertigungsteil 2 verbunden. Die Druckquelle 3 kann eine Überdruckquelle oder Unterdruckquelle sein.

Die Vorrichtung 1 ist zur Durchführung einer Dichtheitsprüfung eingerichtet. Dabei wird in einer ersten Phase das Fertigungsteil 2 mit von der Druckquelle 3 bereitgestelltem Druck beaufschlagt, während in einer zweiten Phase eine Fluidverbindung zwischen dem Fertigungsteil 2 und der Druckquelle 3, beispielsweise unter Verwendung eines Absperrventils, unterbrochen wird und eine Druckänderung in dem Fertigungsteil 2 erfasst und ausgewertet wird. Ist das Fertigungsteil zu Beginn der zweiten Phase mit Überdruck beaufschlagt, stellt sich bei einer Leckage im Fertigungsteil 2 ein Druckabfall in dem Fertigungsteil 2 ein (so genannte Druckabfallmethode), während bei einer anfänglichen Beaufschlagung mit Unterdruck eine Leckage im Fertigungsteil 2 zu einem Druckanstieg in dem Fertigungsteil 2 führt. Eine Änderungsrate des Istdrucks im Fertigungsteil 2 stellt ein Maß für eine Leckrate des Fertigungsteils 2 dar, da bei bekanntem Volumen des Fertigungsteils 2 aus der Druckänderungsrate die Leckrate ermittelt werden kann.

Die Vorrichtung 1 ist zur automatischen Durchführung eines Messzyklus eingerichtet. Die Vorrichtung 1 umfasst eine Recheneinrichtung 11, die beispielsweise einen Prozessor und einen Speicher aufweisen kann, eine Druckkontrolleinrichtung, die einen Druckregler 12 und einem Absperrventil 13 aufweist, und eine Sensoreinrichtung, die einen Absolutdrucksensor 14 umfasst. Die Recheinrichtung 11 ist mit dem Druckregler 12 gekoppelt, um Sollwerte für in der ersten Phase des Messzyklus in dem Fertigungsteil 2 einzustellende Drücke an den Druckregler 12 bereitzustellen. Die Recheneinrichtung 11 ist weiterhin mit dem Absperrventil 13 gekoppelt, um dieses steuerbar zu schließen, um eine Fluidverbindung zwischen dem Fertigungsteil 2 und dem Druckregler 12 abzusperren.

Die Recheneinrichtung 11 ist weiterhin mit einer Benutzerschnittstelle 15 gekoppelt, die beispielsweise einen Drehknopf, eine oder mehrere Taster, einen Bildschirm, einen berührungsempfindlichen Bildschirm oder dergleichen umfassen kann. Alternativ oder zusätzlich kann eine mit einem externen Computer zu koppelnde Schnittstelle an der Vorrichtung 1 vorgesehen sein, über die von dem externen Computer Benutzerbefehle oder sonstige Eingaben an die Recheneinrichtung 11 übertragen werden. Über die Benutzerschnittstelle 15 ist beispielsweise ein gewünschter Prüfdruck oder eine maximale Zeitdauer eines Messzyklus benutzerdefiniert eingebbar. Weiterhin können über die Benutzerschnittstelle 15 ein oder mehrere benutzerdefiniert vorgebbare Gütekriterien für einen Messzyklus eingegeben werden, die von der Recheneinrichtung 11 zur automatischen Festlegung von Parametern für die Dichtheitsprüfung verwendet werden. Über eine mit der Recheneinrichtung 11 gekoppelte Datenschnittstelle 16 können erfasste Messsignale oder Ergebnisse einer von der Recheneinrichtung 11 vorgenommenen Auswertung von Messsignalen an externe Geräte wie Drucker oder Computer ausgegeben werden.

Die Vorrichtung 1 weist einen Anschluss 17 zum Ankoppeln der Druckquelle 3 und einen Anschluss 20 für die mit dem Fertigungsteil 2 gekoppelte Leitung 4 auf. Der Anschluss 17 ist in der Vorrichtung 1 über eine Leitung 18 mit dem Druckregler 12 gekoppelt, um im Betrieb der Vorrichtung Gas von der Druckquelle 3 an den Druckregler 12 bereitzustellen. Eine Entlüftungsöffnung 21 oder ein Entlüftungsanschluss ist über eine Leitung 22 mit dem Druckregler 12 gekoppelt. Die Entlüftungsöffnung kann beispielsweise mit einer Vakuumquelle gekoppelt werden. Der Anschluss 20 ist über das Absperrventil 13 mit dem Druckregler 12 gekoppelt, um eine über den Druckregler 12 und die Stellung des Absperrventils 13 kontrollierbare Druckbeaufschlagung des Fertigungsteils 2 zu ermöglichen.

Wenn die Vorrichtung mit der Druckquelle 3 und dem Fertigungsteil 2 gekoppelt ist, steuert die Recheneinrichtung 11 den Druckregler 12 und das Absperrventil gemäß einem Messzyklus an, um eine Dichtheitsprüfung durchzuführen oder einen oder mehrere Parameter für die Dichtheitsprüfung automatisch festzulegen. Ein von dem Drucksensor 14 erfasstes Messsignal wird an die Recheneinrichtung 11 bereitgestellt.

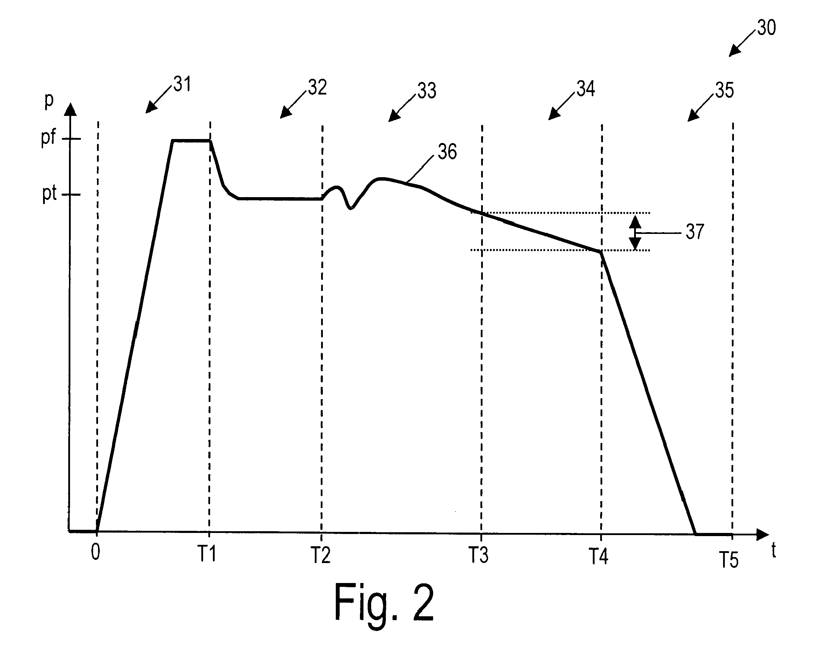

Fig. 2 ist eine schematische Darstellung 30 zur Erläuterung eines Messzyklus, bei der ein beispielhaftes Messsignal 36 des Drucksensors 14 als Funktion der Zeit dargestellt ist.

Bei dem dargestellten Messzyklus wird in einer ersten Phase im Zeitintervall von 0 bis T2 ein Fertigungsteil auf kontrollierte Weise mit Druck beaufschlagt. Dazu kann in einem ersten Abschnitt 31 der ersten Phase des Messzyklus der Druck zunächst auf einen ersten Wert pf eingestellt und in einem anschließenden zweiten Abschnitt 32 der ersten Phase des Messzyklus an einen benutzerdefinierten Prüf- oder Testdruck pt angeglichen werden. Der erste Abschnitt 31 wird auch als Füllabschnitt oder Füllphase bezeichnet, während der zweite Abschnitt 32 auch als Abgleichsabschnitt oder Abgleichsphase bezeichnet wird.

In einer zweiten Phase im Zeitintervall von T2 bis T4 ist eine Fluidverbindung zwischen Fertigungsteil und Druckquelle unterbrochen. Basierend auf dem in einem Messabschnitt 34, der schematisch im Zeitintervall von T3 bis T4 dargestellt ist, erfassten Messsignal wird eine Leckrate ermittelt. Die Druckänderung $\Delta p$ während des Messabschnitts 34, die schematisch bei 37 dargestellt ist, kann unter der Annahme einer näherungsweise linearen Druckänderung in dem Messabschnitt zur Ermittlung der Leckrate verwendet werden. Bei bekanntem Volumen V des Fertigungsteils ist die Leckrate Q nach $Q = V \cdot \Delta p / (T4-T3)$ aus der Druckänderung während des Messabschnitts 34 ermittelbar. Ein dem Messabschnitt 34 vorangehender Warte- oder Beruhigungsabschnitt 33 erlaubt ein Abklingen dynamischer Druckänderungen, die beispielsweise durch das Schließen eines Absperrventils oder durch thermischen Effekte hervorgerufen werden.

In einer Entlüftungsphase 35, die dem Messabschnitt 34 nachfolgt und schematisch im Zeitintervall von T4 bis T5 dargestellt ist, wird das Fertigungsteil entlüftet, um die Durchführung eines neuen Messzyklus zu erlauben.

Bei der Vorrichtung 1 steuert die Recheneinrichtung 11 das Absperrventil 13 derart an, dass es in der ersten Phase von 0 bis T2 offen ist und bei T2 geschlossen wird. Während der ersten Phase wird ein Sollwert für die Druckbeaufschlagung des Fertigungsteils an den Druckregler 12 bereitgestellt, der gemäß dem Zeitablaufplan des Messzyklus von pf zu dem Prüfdruck pt geändert wird. Während der zweiten Phase von T2 bis T4 bleibt das Absperrventil geschlossen. In der Entlüftungsphase 35 steuert die Recheneinrichtung 11 den Druckregler 12 und das Absperrventil 13 so an, dass eine Entlüftung des Fertigungsteils, beispielsweise über die Entlüftungsöffnung 21, möglich ist.

Der in Fig. 2 dargestellte Messzyklus 30 ist nur beispielhaft. Bei einer weiteren Ausgestaltung kann beispielsweise der erste Abschnitt 31 der ersten Phase weggelassen werden, d.h. der Druck im Fertigungsteil kann ohne Zwischenstufe auf den benutzerdefinierten Prüfdruck pt eingestellt werden.

Der Messzyklus 30 zur Dichtheitsprüfung weist eine Mehrzahl veränderbarer Parameter auf. Beispielsweise können selbst bei benutzerdefiniert fest vorgegebenem Prüfdruck pt die Endzeitpunkte T1, T2, T3, T4 der verschiedenen Abschnitte des Messzyklus und somit die Dauern dieser Abschnitt und der erste Druck pf variiert werden. Typischerweise ist es erwünscht, diese Parameter derart einzustellen, dass für einen Messzyklus mit begrenzter Maximaldauer die Rate der Druckänderung in dem Messabschnitt mit ausreichend hoher Genauigkeit ermittelbar ist.

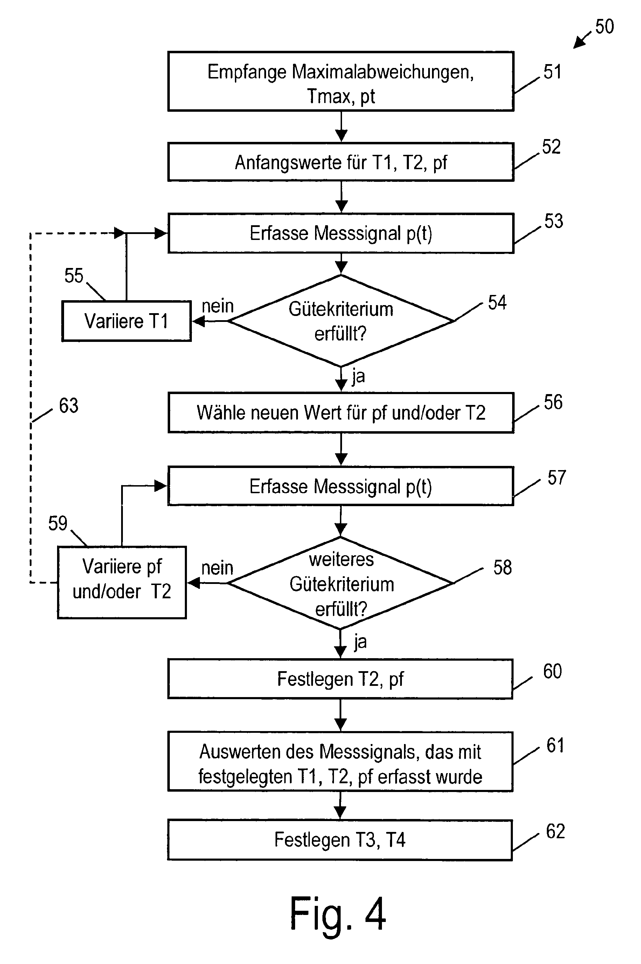

Die Vorrichtung 1 ist eingerichtet, um die Parameter T1, T2, T3, T4 und pf automatisch zu ermitteln, wie unter Bezugnahme auf Fig. 4-8 näher erläutert wird. Insbesondere können die Parameter im Hinblick auf benutzerdefiniert vorgebbare Kriterien automatisch ermittelt werden. Basierend auf den automatisch ermittelten Parametern kann eine Mehrzahl von Prüflingen einer Dichtheitsprüfung unterzogen werden, wobei der Messzyklus für die Prüflinge jeweils unter Verwendung der automatisch ermittelten Parameter durchgeführt wird.

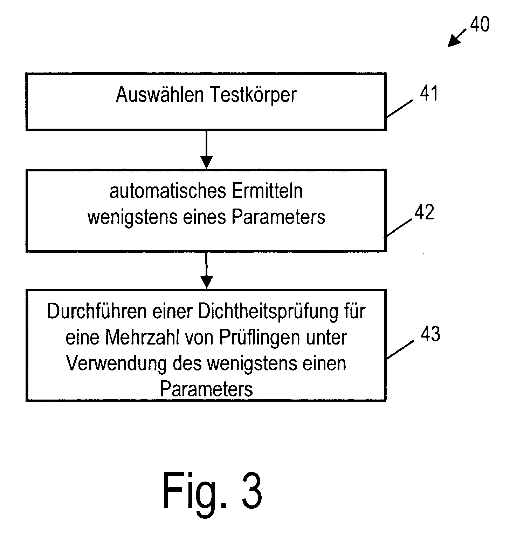

Fig. 3 zeigt eine Flussdiagrammdarstellung eines Verfahrens 40, mit dem eine Dichtheitsprüfung für eine Mehrzahl von Prüflingen durchgeführt werden kann, die eine im Wesentlichen identische Ausgestaltung aufweisen. Die Dichtheitsprüfung kann unter Verwendung der Vorrichtung 1 von Fig. 1 durchgeführt werden.

Bei 41 wird ein Testkörper ausgewählt. Vorteilhaft wird der Testkörper so ausgewählt, dass er eine zu den Prüflingen identische Ausgestaltung aufweist. Der Testkörper kann so ausgewählt werden, dass er eine bekannte Leckrate aufweist. Beispielsweise kann als Testkörper ein Master verwendet werden, von dem bekannt ist, dass er keine Leckage aufweist. Der Testkörper kann ausgewählt werden, indem für einige Prüflinge zunächst eine vorläufige Dichtheitsprüfung unter Verwendung von Default-Werten für die Parameter T1, T2, T3, T4 und pf durchgeführt wird, wobei der dabei ermittelte Prüfling mit der geringsten Leckrate als Testkörper verwendet wird.

Bei 42 wird wenigstens ein Parameter der Dichtheitsprüfung automatisch ermittelt. Beispielsweise können für den in Fig. 2 schematisch dargestellten Messzyklus T1, T2, T3, T4 und pf automatisch ermittelt werden. Zur automatischen Ermittlung des wenigstens einen Parameters können mehrere Messzyklen an dem Testkörper durchgeführt werden, wobei zwischen wenigstens zwei der Messzyklen ein Wert wenigstens eines Parameters verändert wird. Bei einer weiteren Ausgestaltung kann eine Mehrzahl von Messzyklen unter Verwendung einer Mehrzahl unterschiedlicher Werte für die verschiedenen Parameter durchgeführt werden. Der wenigstens eine Parameter wird basierend auf den in den verschiedenen Messzyklen erfassten Messsignalen automatisch bestimmt. Die automatische Ermittlung des wenigstens einen Parameters bei 42 kann unter Verwendung des Verfahrens zum automatischen Ermitteln wenigstens eines Parameters durchgeführt werden, das unter Bezugnahme auf Fig. 4-8 detaillierter beschrieben werden wird.

Bei 43 wird die Mehrzahl von Prüflingen einer Dichtheitsprüfung unterzogen, wobei der Messzyklus gemäß den bei 42 automatisch ermittelten Parametern durchgeführt wird.

Fig. 4 ist eine Flussdiagrammdarstellung eines Verfahrens 50 zum automatischen Ermitteln wenigstens eines Parameters für eine Dichtheitsprüfung. Das Verfahren kann mit der Vorrichtung 1 von Fig. 1 durchgeführt werden und zur Implementierung des Schritts 42 bei dem Verfahren 40 von Fig. 3 verwendet werden.

Das Verfahren 50 wird beispielhaft für die Parameter T1, T2, T3, T4 und pf des Messzyklus 30 von Fig. 2 erläutert. Die automatische Ermittlung von Parametern für die Dichtheitsprüfung kann jedoch entsprechend auch für andere Messzyklen durchgeführt werden, deren Ablauf von dem in Fig. 2 schematisch dargestellten abweicht.

Bei dem Verfahren 50 wird der wenigstens eine Parameter der Dichtheitsprüfung gemäß verschiedenen, kumulativ angewendeten Kriterien ermittelt. Diese Kriterien können beispielsweise beinhalten, dass der Istdruck in dem Testkörper zu verschiedenen Zeitpunkten während des Messzyklus höchstens um eine Maximalabweichung von einem bestimmten Druckwert abweicht. Die Maximalabweichung kann dabei einen vorgebbaren Default-Wert annehmen, kann aber auch benutzerdefiniert vorgegeben werden. Die Kriterien können weiterhin beinhalten, dass die Messsignal in zwei mit unterschiedlichen Parameterwerten durchgeführten Messzyklen zu einem Zeitpunkt während des Messzyklus höchstens um eine Maximalabweichung voneinander abweichen.

Bei 51 wird eine Benutzereingabe erfasst, die zulässige Maximalabweichungen während des Messzyklus, eine maximale Zeitdauer Tmax des Messzyklus und den Prüfdruck pt angibt. Wenn keine Benutzereingabe erfasst wird, oder eine Benutzereingabe nur für einen Teil der einstellbaren Größen erfolgt, können die nicht benutzerdefinierten Größen mit Default-Werten belegt werden. Bei der Vorrichtung von Fig. 1 kann die Benutzereingabe über die Benutzerschnittstelle 15 erfolgen. Bei einer Ausgestaltung können wenigstens drei einstellbare Maximalabweichungen benutzerdefiniert eingegeben werden, die beispielsweise eine zulässige Maximalabweichung $\varepsilon_1$ des bei T1 erfassten Istdrucks von pf, eine zulässige Maximalabweichung $\varepsilon_2$ des bei T2 erfassten Istdrucks von pt und eine zulässige Maximalabweichung $\varepsilon_3$ des bei Tmax erfassten Istdrucks von pt angeben. Weiterhin kann bei 51 eine vom Benutzer gewünschte maximale Messunsicherheit $\varepsilon_M$ während des Messabschnitts eingegeben werden.

Bei 52 werden Anfangswerte für T1, T2 und pf festgelegt. Bei den Anfangswerten kann es sich um Default-Werte handeln. Die Anfangswerte können auch in Abhängigkeit von dem Prüfdruck pt ermittelt werden.

Bei 53 wird ein Messsignal für einen Messzyklus erfasst, bei dem T1, T2 und pf die bei 52 festgelegten Anfangswerte aufweisen. Das erfasste Messsignal kann der von dem Drucksensor 14 bereitgestellte Istdruck p(t) in dem Testkörper sein. Der Istdruck kann in diskreten Zeitabschnitten erfasst und an die Recheneinrichtung 11 bereitgestellt werden. Der Messzyklus wird mit der vorgegebenen maximalen Zeitdauer Tmax durchgeführt. Das heißt, dass nach dem Unterbrechen der Fluidverbindung zwischen dem Druckregler 12 und dem Testkörper durch das Absperrventil 13 zum Zeitpunkt T2 das Absperrventil 13 bis zur Zeit Tmax geschlossen gehalten und das Messsignal bis zur Zeit Tmax erfasst wird.

Bei 54 überprüft die Recheneinrichtung 11, ob das erfasste Messsignal ein Gütekriterium erfüllt. Beispielsweise kann das erfasste Messsignal bei 54 daraufhin überprüft werden, ob der erfasste Istdruck zur Zeit T1, p(T1), um weniger als die zulässige Maximalabweichung $\varepsilon_1$ von dem bei 52 festgelegten Anfangswert für pf abweicht. Falls bei 54 ermittelt wird, dass der erfasste Istdruck zur Zeit T1, p(T1), um mindestens die zulässige Maximalabweichung $\varepsilon_1$ von dem bei 52 festgelegten Ausgangswert für pf abweicht, wird bei 55 T1 verändert. Insbesondere kann bei 55 der festgelegte Wert für T1 erhöht werden, und das Verfahren wird bei 53 mit der erneuten Erfassung des Messsignals p(t) in einem erneuten Messzyklus unter Verwendung des neuen Werts für T1 fortgesetzt.

Falls bei 54 bestimmt wird, dass das Gütekriterium erfüllt ist, wird bei 56 ein neuer Wert für pf und/oder T2 gewählt, und bei 57 ein Messzyklus unter Verwendung des neuen Werts für pf und/oder T2 durchgeführt, wobei ein Messsignal p(t) erfasst wird. Der Messzyklus wird bei 57 mit der benutzerdefiniert vorgegebenen maximalen Zeitdauer Tmax durchgeführt. Das heißt, dass nach dem Unterbrechen der Fluidverbindung zwischen dem Druckregler 12 und dem Testkörper durch das Absperrventil 13 zum Zeitpunkt T2 das Absperrventil 13 bis zur Zeit Tmax geschlossen gehalten und das Messsignal bis zur Zeit Tmax erfasst wird.

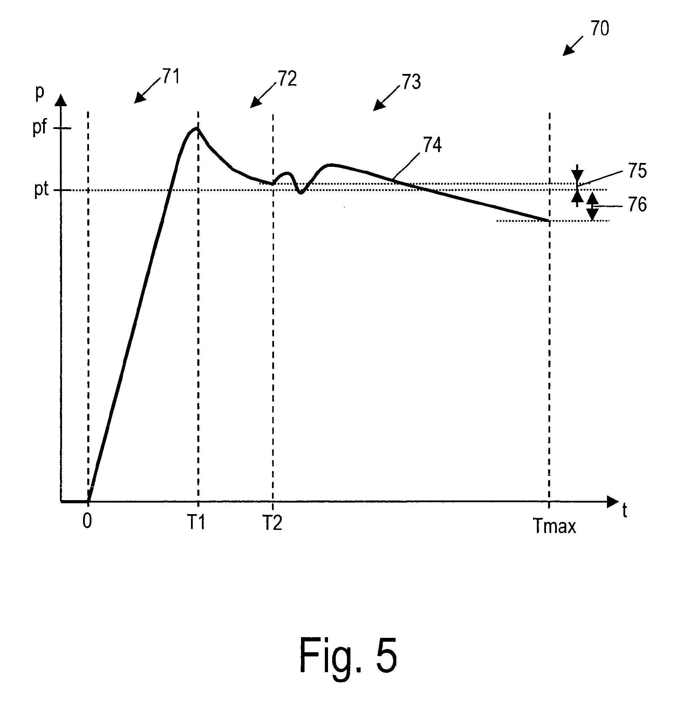

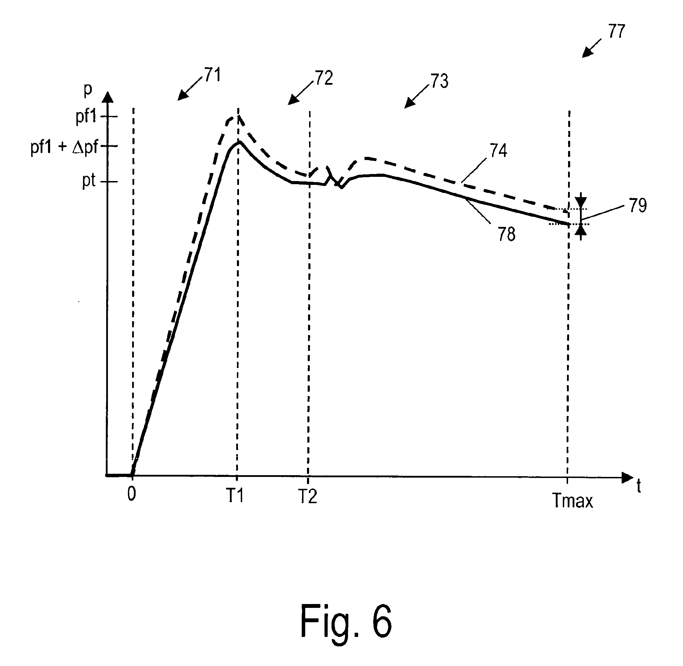

Bei 58 wird überprüft, ob das bei 57 erfasste Messsignal ein weiteres Gütekriterium oder weitere Gütekriterien erfüllt. Wie unter Bezugnahme auf Fig. 5 und 6 noch näher erläutert werden wird, können die bei 58 überprüften weiteren Gütekriterien beispielsweise eine Überprüfung beinhalten, ob der erfasste Istdruck zur Zeit T2, p(T2), um weniger als die zulässige Maximalabweichung $\varepsilon_2$ von dem bei 51 benutzerdefiniert festgelegten Wert für pt abweicht. Alternativ oder zusätzlich können die bei 58 überprüften weiteren Gütekriterien beispielsweise eine Überprüfung beinhalten, ob der erfasste Druck, beispielsweise bei der Zeit Tmax, stabil gegenüber Änderungen eines der Parameter T2 und/oder pf ist. Die Überprüfung der weiteren Gütekriterien bei 58 kann nicht nur auf dem bei 57 zuletzt erfassten Messsignal, sondern auch auf mehreren, für verschiedene Parameterwerte erfassten Messsignalen beruhen. Beispielsweise können Differenzen von für verschiedene Parameterwerte erfassten Messsignalen ermittelt und mit einer zulässigen Maximalabweichung verglichen werden.

Falls bei 58 ermittelt wird, dass das weitere Gütekriterium nicht erfüllt ist, wird bei 59 der Wert für pf und/oder T2 verändert, und das Verfahren kehrt zu 57 zurück, wo ein neuer Messzyklus basierend auf dem neu eingestellten Wert für pf und/oder T2 durchgeführt wird.

Sofern der bei 59 neu eingestellte Wert für pf signifikant von dem bei 52 festgelegten Anfangswert für pf abweicht, können die Schritte 53-55 nach Schritt 59 noch einmal wiederholt werden. Bei einer weiteren Variante kann das Verfahren nach Schritt 59 zu Schritt 53 zurückkehren, wie mit der durchbrochenen Linie 63 dargestellt ist, wobei die Schritte 53-59 erneut durchlaufen werden, bis die Parameterwerte für T1, T2 und pf konvergieren.

Falls bei 58 ermittelt wird, dass das weitere Gütekriterium erfüllt ist, werden bei 60 Werte für die Parameter pf und T2 festgelegt. Beispielsweise können die bei der letzten Iteration über die Schritte 57 und 58 verwendeten Werte für pf und T2 bei 60 als die Parameterwerte für die Dichtheitsprüfung festgelegt werden.

Bei einer weiteren Ausgestaltung kann eine vorherbestimmte Anzahl von Wiederholungen des Schritts 57 oder ein vorherbestimmter Variationsbereich für pf und T2 vorgesehen sein, so dass zunächst eine Mehrzahl von Messsignalen für mehrere Werte von pf und T2 erfasst wird. Anschließend können alle erfassten Messsignale im Hinblick auf ein oder mehrere Gütekriterien bewertet werden, wie unter Bezugnahme auf Schritt 58 erläutert. Basierend auf dieser Auswertung können anschließend Werte für die Parameter pf, T1 und T2 festgelegt werden.

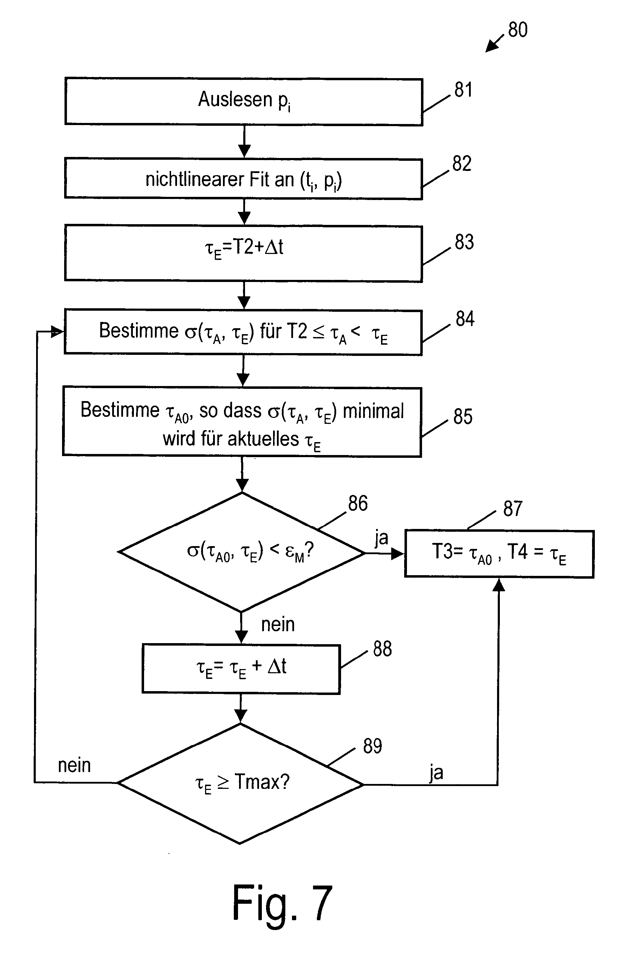

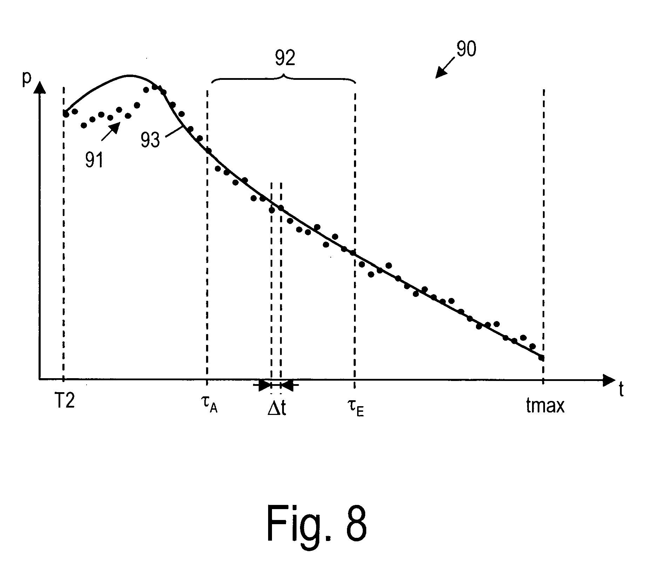

Bei 61 wird das Messsignal, das mit den festgelegten Werten für T1, T2 und pf ermittelt wurde, für das Zeitintervall $T2 \leq t \leq Tmax$ ausgewertet, um bei 62 Werte für T3 und T4 festzulegen. Eine mögliche Implementierung der Schritte 61 und 62 wird unter Bezugnahme auf Fig. 7 und 8 näher erläutert.

Bei dem Verfahren 50 von Fig. 4 wird eine Mehrzahl von Parametern, die den Ablauf eines Messzyklus einer Dichtheitsprüfung bestimmen, automatisch festgelegt, indem an einem Messkörper eine Mehrzahl von Messzyklen durchgeführt wird. Dabei wird pf und/oder T2 und gegebenenfalls T1 zwischen den Messzyklen variiert. Basierend auf den in den verschiedenen Messzyklen erfassten Messsignalen werden T1, T2, T3, T4 und pf automatisch festgelegt. Die Festlegung dieser Parameter kann dabei in Abhängigkeit von Gütekriterien erfolgen, die benutzerdefiniert vorgebbar sind, wie nachfolgend unter Bezugnahme auf Fig. 5-8 näher erläutert werden wird.

Fig. 5 ist eine schematische Darstellung 70, die ein beispielhaftes Messsignal 74 zeigt, wie es bei Schritt 57 des Verfahrens 50 erfasst werden kann. Bei dem in Schritt 57 des Verfahrens 50 durchgeführten Messzyklus steuert die Recheneinrichtung 11 den Druckregler 12 so an, dass in dem Abschnitt 71 bis zur Zeit T1 der Testkörper mit einem Solldruck beaufschlagt wird, der dem für die jeweilige Iteration gewählten Wert von pf entspricht. Weiterhin steuert die Recheneinrichtung 11 den Druckregler 12 so an, dass in dem Abschnitt 72 bis zur Zeit T2 der Testkörper mit einem Solldruck beaufschlagt wird, der ausgehend von pf zu dem Prüfdruck pt geändert wird. Zur Zeit T2 steuert die Recheneinrichtung 11 das Absperrventil 13 an, so dass das Absperrventil 13 geschlossen wird. In der anschließenden Phase 73 wird das Messsignal 74 bis zur Zeit Tmax erfasst. Nach Tmax kann der Testkörper entlüftet und ein neuer Messzyklus eingeleitet werden.

Ein Kriterium, das bei Schritt 58 des Verfahrens 50 zur Festlegung der Parameter T2 und pf überprüft werden kann, beinhaltet einen Vergleich des erfassten Messsignals zur Zeit T2, p(T2), mit dem Prüfdruck pt. Eine Differenz zwischen p(T2) und pt ist schematisch bei 75 dargestellt. Der Absolutwert der Differenz zwischen p(T2) und pt kann mit der Maximalabweichung $\varepsilon_2$ verglichen werden, die benutzerdefiniert vorgegeben werden kann. Eine große Differenz zwischen p(T2) und pt zeigt an, dass die Dichtheitsprüfung für die aktuellen Werte von T2 und pf nicht bei dem gewünschten Prüfdruck pt durchgeführt wird.

Ein weiteres Kriterium, das bei Schritt 58 des Verfahrens 50 überprüft werden kann, beinhaltet einen Vergleich des erfassten Messsignals zur Zeit Tmax, p(Tmax), mit dem Prüfdruck pt. Eine Differenz zwischen p(Tmax) und pt ist schematisch bei 76 dargestellt. Insbesondere wenn ein Testkörper mit sehr kleiner, im Idealfall verschwindender Leckrate verwendet wird, sollte die Differenz zwischen p(Tmax) und dem Prüfdruck pt klein sein. Größere Differenzen zwischen p(Tmax) und dem Prüfdruck pt können ein Indiz dafür sein, dass für die entsprechenden Werte von T2 und pf dynamische Druckschwankungen, temperaturinduzierte Druckänderungen oder dergleichen nicht ausreichend abklingen. Der Absolutwert der Differenz zwischen p(T2) und pt kann mit der Maximalabweichung $\varepsilon_3$ verglichen werden, die benutzerdefiniert festgelegt werden kann.

Anhand der Kriterien, dass $|p(T1) - pf| < \varepsilon_1$, $|p(T2) - pt| < \varepsilon_2$ und $|p(Tmax) - pt| < \varepsilon_3$ sein soll, können die für verschiedene Werte von T1, T2 und pf aufgenommenen Messsignale im Hinblick auf mehrere Gütekriterien für das erhaltene Messsignal bewertet werden. Während diese Kriterien für jedes der erfassten Messsignale individuell auswertbar sind, können zum Festlegen der Parameter auch Kriterien verwendet werden, die einen Vergleich mehrerer in Messzyklen mit unterschiedlichen Parametern erfasster Messsignale beinhalten.

Ein weiteres Kriterium, das bei Schritt 58 des Verfahrens 50 überprüft werden kann, beinhaltet einen Vergleich der für verschiedene Werte des Parameters pf und/oder T2 erfassten Messsignale zur Zeit Tmax.

Fig. 6 ist eine schematische Darstellung 77, die zusätzlich zu dem Messsignal 74 ein weiteres beispielhaftes Messsignal 78 zeigt, wie es bei Schritt 57 des Verfahrens 50 in einer weiteren Iterationen erfasst werden kann. Zwischen dem Messzyklus, in dem das Messsignal 74 erfasst wird, und dem Messzyklus, in dem das Messsignal 78 erfasst wird, wird der Solldruck, mit dem der Testkörper im ersten Abschnitt 71 beaufschlagt werden soll, von pf1 um $\Delta pf$ auf $pf1+\Delta pf$ verändert. Eine Differenz zwischen den beiden Messsignalen zur Zeit Tmax, $\Delta p(Tmax)$, die in den Messzyklen mit verschiedenen Parameterwerten erfasst werden, ist schematisch bei 79 dargestellt.

Nach einer Ausgestaltung kann die durch eine Änderung eines Parameterwerts hervorgerufene Änderung des Messsignals bei Tmax, bezogen auf die Änderung des Parameterwerts, mit einem zulässigen Maximalwert verglichen werden. Wird beispielsweise der Solldruck pf um $\Delta pf$ verändert, kann der Quotient $|\Delta p(Tmax)/\Delta pf|$ mit einem Maximalwert verglichen werden, um eine Stabilität des Messsignals nach dem Schließen des Absperrventils 13 gegenüber Veränderungen des Parameters pf zu überprüfen. Der Maximalwert, mit dem der Quotient $|\Delta p(Tmax)/\Delta pf|$ verglichen wird, kann benutzerdefiniert sein. Bei einer weiteren Ausgestaltung kann überprüft werden, ob $|\Delta p(Tmax)/\Delta pf| < \varepsilon_3/\varepsilon_1$ ist, um akzeptierbare Parameterwerte für T1, T2 und pf festzulegen.

Die verschiedenen oben erläuterten Kriterien, die beim Festlegen der Parameter T1, T2 und pf herangezogen werden können, können auch miteinander kombiniert werden. So kann beispielsweise derjenige Satz von Parametern ermittelt werden, für den die Kriterien $|p(T1) - pf| < \varepsilon_1$, $|p(T2) - Pt| < \varepsilon_2$ und $|p(Tmax) - Pt| < \varepsilon_3$ sowie $|\Delta p(Tmax)/\Delta pf| < \varepsilon_3/\varepsilon_1$ erfüllt sind. Sind diese Kriterien für mehrere Werte von T1, T2 und pf erfüllt, kann eine weitere Auswahl unter diesen Sätzen von Parameterwerten nach zusätzlichen Kriterien getroffen werden. Beispielsweise kann derjenige Satz von Parameterwerten für T1, T2 und pf festgelegt werden, für den T2 minimal ist, oder es kann derjenige Satz von Parameterwerten für T1, T2 und pf festgelegt werden, für den $|p(Tmax) - pt|$, $|p(T2) - pt|$ oder eine gewichtete Überlagerung von $|p(Tmax) - pt|$ und $|p(T2) - pt|$ minimal ist.

Bei dem Verfahren 50 von Fig. 4 werden bei Schritten 61 und 62 die zeitlichen Grenzen T3, T4 des Messabschnitts festgelegt. Bei dem Verfahren 50 von Fig. 4 erfolgt die Festlegung von T3 und T4 basierend auf dem Messsignal, das in dem Messzyklus für die festgelegten Werte von T1, T2 und pf ermittelt wurde.

Bei der Festlegung der Grenzen des Messabschnitts können T3 und T4 derart festgelegt werden, dass ein Fehler für die ermittelte Druckänderungsrate kleiner als eine vorgebbare maximale Messunsicherheit ist. Unter der Annahme einer linearen Abhängigkeit der Druckänderung von der Dauer des Messabschnitts kann beispielsweise das Messintervall so gewählt werden, dass ein Fehler der aus den Messwerten ermittelten Steigung einer linearen Fitfunktion kleiner als die maximale Messunsicherheit ist. Die maximale Messunsicherheit kann benutzerdefiniert vorgegeben werden, beispielsweise bei Schritt 51 des Verfahren 50 von Fig. 4. Falls kein benutzerdefinierter Wert vorgegeben wird, kann ein Default-Wert verwendet werden.

Zur Festlegung der Grenzen des Messabschnitts kann eine mittlere quadratische Abweichung des Messsignals, das in dem Messzyklus für die festgelegten Werte von T1, T2 und pf ermittelt wurde, von einem linearen besten Fit für eine Mehrzahl von Zeitintervallen ermittelt werden, die in dem Zeitintervall von t=T2 bis t=Tmax liegen. Weiterhin können die Grenzen des Messabschnitts so festgelegt werden, dass nichtlineare Druckänderungen während des Messabschnitts bereits ausreichend abgeklungen sind. Bei einer Ausgestaltung kann eine nichtlineare Funktion für $T2 \leq t \leq Tmax$ an das

Messsignal angefittet werden, deren Steigungsänderung für die Mehrzahl von Zeitintervallen ausgewertet wird, um eine Nichtlinearität der Druckänderung abzuschätzen.

Um T3 und T4 festzulegen, können verschiedene Zeitintervalle mit einer Anfangszeit $\tau_A$ und einer Endzeit $\tau_E$, die zwischen t=T2 und t=Tmax liegen, gemäß einer Funktion

$$\sigma^2 = \left(w \cdot \sigma_R\right)^2 + \sigma_{nl}^2 \qquad (1)$$

bewertet werden, wobei $\sigma$ die zur Bewertung des Zeitintervalls verwendete Funktion bezeichnet, $\sigma_R$ ein Rauschterm ist, der eine Unsicherheit einer basierend auf dem Messsignal in dem Zeitintervall ermittelten Steigung einer linearen Fit-funktion quantifiziert, und $\sigma_{nl}$ eine Nichtlinearität des Messsignals in dem Zeitintervall quantifiziert. Der Koeffizient w ist ein Gewichtungsfaktor. Beispielsweise kann w=3 gewählt werden.

Nachfolgend wird zu Erläuterungszwecken angenommen, dass das Messsignal im Zeitintervall von T2 bis Tmax in einer Mehrzahl von Druckwerten $p_i$ erfasst wird, die diskreten Zeiten $t_i$ zugeordnet sind.

Mit dem Rauschterm $\sigma_R$ wird berücksichtigt, dass die Grenzen T3, T4 des Messabschnitts vorteilhaft so gewählt werden sollen, dass bei einem linearen Fit

$$p_i = A \cdot t_i + B \qquad (2)$$

an das Messsignal zwischen T3 und T4 der ermittelte Wert für den Koeffizienten A, aus dem die Leckrate Q ermittelbar ist, mit einer nicht zu großen Unsicherheit behaftet ist.

Für ein Zeitintervall mit einer Anfangszeit $\tau_A$ und einer Endzeit $\tau_E$ ist die Unsicherheit, mit der A beim Anfitten der Funktion (2) an das Messsignal in dem Zeitintervall von $\tau_A$ bis $\tau_E$ behaftet ist, näherungsweise durch

$$\sigma_R^2 \approx \frac{12 \cdot \sigma_p^2}{\left(\tau_E - \tau_A\right)^3 / \Delta t} \qquad (3)$$

gegeben, falls die Zeiten $t_i = T2 + (i-1) \cdot \Delta t$ im Wesentlichen äquidistant sind, d.h. falls in Zeitabständen $\Delta t$ jeweils ein neuer Messsignalwert $p_i$ erfasst wird, und falls $N = (\tau_E - \tau_A)/\Delta t \gg 1$. Auf der rechten Seite von Gleichung (3) bezeichnet $\sigma_p$ eine mittlere quadratische Abweichung von dem besten linearen Fit an das Messsignal in dem Zeitintervall von $\tau_A$ bis $\tau_E$,

$$\sigma_p^2 = \frac{1}{N-2} \sum_i^N \left[ p_i - \left( A \cdot t_i + B \right) \right]^2 , \qquad (4)$$

d.h. die Varianz der erfassten Druckwerte $p_i$ um den besten linearen Fit, wobei $N = (\tau_E - \tau_A)/\Delta t$.

Bei einer Ausgestaltung kann der Rauschterm $\sigma_R$ für eine Mehrzahl von Zeitintervallen mit $T2 \leq \tau_A < \tau_E \leq Tmax$ bestimmt werden. Der Messabschnitt kann als dasjenige Zeitintervall der Zeitintervalle festgelegt werden, für das der Rauschterm kleiner als die vorgebbare maximale Messunsicherheit $\varepsilon_M$ und $\tau_E$ minimal ist.

Bei einer weiteren Ausgestaltung kann gemäß Gleichung (1) zusätzlich zu der mittleren quadratischen Abweichung von dem besten linearen Fit, wie sie in Gleichung (4) angegeben ist, noch berücksichtigt werden, dass bei langen Messabschnitten nichtlineare Signalkomponenten des Messsignals einen größeren Einfluss haben können.

Zur Abschätzung des Einflusses nichtlinearer Signalkomponenten kann eine nichtlineare Funktion, beispielsweise der Form,

$$p(t) = a_0 \cdot \exp(a_1 \cdot t) + a_2 \cdot t + a_3 , \qquad (5)$$

an das Messsignal für $T2 \leq t \leq Tmax$ angefittet werden. In Gleichung (5) bezeichnen $a_0$, $a_1$, $a_2$ und $a_3$ Fitparameter der nichtlinearen Fitfunktion. Der erste Term auf der rechten Seite von Gleichung (5) weist ein exponentielles Verhalten auf, wie es beispielsweise aufgrund eines Temperaturausgleichs zwischen Prüfling und Gas auftreten kann, wobei typischer-weise $a_1 < 0$.

Für jedes Zeitintervall der Mehrzahl von Zeitintervalle kann eine Änderung der Steigung der nichtlinearen Funktion (5) während des Zeitintervalls gemäß

$$\sigma_{nl} = \left| a_0 \cdot a_1 \cdot \left[ \exp(a_1 \cdot \tau_E) - \exp(a_1 \cdot \tau_A) \right] \right| \qquad (6)$$

ermittelt werden.

Bei einer Ausgestaltung können der Rauschterm $\sigma_R$ gemäß Gleichung (3) und (4) und der die Nichtlinearität quantifizierende Term gemäß Gleichung (6) für eine Mehrzahl von Zeitintervallen mit $T2 \leq \tau_A < \tau_E \leq Tmax$ bestimmt werden. Der Messabschnitt kann als dasjenige Zeitintervall festgelegt werden, für das eine geeignete Kombination des Rauschterms und des die Nichtlinearität quantifizierenden Terms ein vorgegebenes Gütekriterium erfüllt und für das $\tau_E$ minimal ist. Beispielsweise kann der Messabschnitt als dasjenige Zeitintervall festgelegt werden, für das die in Gleichung (1) angegebene Bewertungsfunktion kleiner als die vorgegebene maximale Messunsicherheit $\varepsilon_M$ und $\tau_E$ minimal ist.

Unter Bezugnahme auf Fig. 7 und Fig. 8 wird nachfolgend eine beispielhafte Verfahrensschrittabfolge zum Festlegen der Grenzen T3, T4 des Messabschnitts ausführlicher beschrieben werden. Die Verfahrensschrittabfolge kann von der Recheneinrichtung 11 der Vorrichtung 1 durchgeführt werden. Die Verfahrensschrittabfolge kann zur Implementierung der Schritte 61 und 62 des Verfahrens 50 von Fig. 5 verwendet werden.

Fig. 7 ist eine Flussdiagrammdarstellung einer Verfahrensschrittabfolge 80 zum Festlegen der Grenzen T3, T4 des Messabschnitts. Fig. 8 ist eine schematische Darstellung 90 zur weiteren Erläuterung der Verfahrensschrittabfolge 80.

Bei der Verfahrensschrittabfolge 80 wird bei 81 eine Mehrzahl von Druckwerten $p_i$ ausgelesen, die in dem Messzyklus für die festgelegten Werte von T1, T2 und pf erfasst wurden. Die Druckwerte $p_i$ sind einer Mehrzahl von diskreten Zeiten $t_i$ zugeordnet, die beispielsweise durch $t_i = T2 + (i-1) \cdot \Delta t$ gegeben sein können, wobei i eine ganze Zahl größer als 0 ist. Fig. 8 zeigt ein beispielhaftes Messsignal 91, das in diskreten Zeitabständen $\Delta t$ erfasst wurde.

Bei 82 wird eine nichtlineare Funktion an das Messsignal angefittet. Die Fitfunktion kann beispielsweise durch Gleichung (5) gegeben sein. Fig. 8 zeigt eine beispielhafte Funktion 93, die einen besten nichtlinearen Fit an das Messsignal für $T2 \leq t \leq Tmax$ repräsentiert.

In Schritten 83-89 erfolgt eine Bewertung einer Mehrzahl von Zeitintervallen mit einer Anfangszeit $\tau_A$ und einer Endzeit $\tau_E$, wobei $T2 \leq \tau_A < \tau_E \leq Tmax$. Bei der dargestellten Verfahrensschrittabfolge werden die Zeitintervalle beginnend mit kleinen Endzeiten $\tau_E$, d.h. kurzen Messzyklen, bewertet.

Bei 83 beginnt die Iteration mit $\tau_E = T2 + \Delta t$. Bei 84 wird für jede Anfangszeit $\tau_A$ mit $T2 \leq \tau_A < \tau_E$; wobei $\tau_A = T2 + j \cdot \Delta t$ mit ganzzahligem $j \geq 0$, das Zeitintervall mit der Anfangszeit $\tau_A$ und der Endzeit $\tau_E$ gemäß einer Bewertungsfunktion $\sigma$ bewertet. Die Bewertungsfunktion $\sigma$ kann wie in Gleichung (1) angegeben definiert sein und ein Rauschen des Messsignals um den besten linearen Fit in dem Zeitintervall von $\tau_A$ bis $\tau_E$ sowie den Einfluss nichtlinearer Signalanteile der Druckänderung als Funktion der Zeit beinhalten, wie beispielsweise in Gleichungen (2)-(6) angegeben.

Bei 85 wird für die aktuelle Endzeit $\tau_E$ die Anfangszeit $\tau_{A0}$ ermittelt, so dass die Bewertungsfunktion für das Intervall von $\tau_{A0}$ bis $\tau_E$, $\sigma(\tau_{A0}, \tau_E)$, den minimalen Wert für die aktuelle Endzeit $\tau_E$ annimmt.

Bei 86 wird überprüft, ob die Bewertungsfunktion für das Zeitintervall von $\tau_{A0}$ bis $\tau_E$, $\sigma(\tau_{A0}, \tau_E)$, kleiner als die vorgegebene maximale Messunsicherheit $\varepsilon_M$ ist. Falls bei 86 ermittelt wird, dass die maximale Messunsicherheit unterschritten ist, werden bei 87 die Grenzen des Messabschnitts derart festgelegt, dass $T3 = \tau_{A0}$ und $T4 = \tau_E$.

Falls bei 86 ermittelt wird, dass die maximale Messunsicherheit $\varepsilon_M$ nicht unterschritten ist, wird bei 88 $\tau_E$ um $\Delta t$ erhöht. Bei 89 wird ermittelt, ob der neue Wert für $\tau_E$ größer als oder gleich Tmax ist. Falls der neue Wert kleiner als Tmax ist, kehrt das Verfahren zu Schritt 84 zurück.

Falls bei 89 ermittelt wird, dass der neue Wert von $\tau_E$ größer als oder gleich Tmax ist, werden bei 87 die Grenzen des Messabschnitts derart festgelegt, dass $T3 = \tau_{A0}$ und $T4 = Tmax$. Zusätzlich kann in diesem Fall ein Signal an den Benutzer ausgegeben werden, um anzuzeigen, dass die gewünschte maximale Messunsicherheit nicht unterschritten werden kann. Zusätzlich kann auch der zuletzt ermittelte Wert für $\sigma(\tau_{A0}, \tau_E)$ ausgegeben werden.

Unter Bezugnahme auf Fig. 4-8 wurden Verfahren zum automatischen Festlegen von Parametern für eine Dichtheitsprüfung beschrieben, mit denen die Dauern verschiedener Abschnitte eines Messzyklus und Werte für einen Solldruck automatisch festgelegt werden können. Die Verfahren nach verschiedenen Ausführungsbeispielen können von der Vorrichtung 1 von Fig. 1 durchgeführt werden. Insbesondere kann die Recheneinrichtung 11 der Vorrichtung 1 derart eingerichtet sein, dass sie weitere Komponenten der Vorrichtung 1, wie den Druckregler 12 und das Absperrventil 13, so ansteuert, dass an einem Testkörper eine Mehrzahl von Messzyklen durchgeführt wird, wobei ein oder mehrere den Ablauf des Messzyklus bestimmende Parameter zwischen den Messzyklen variiert werden. Die Recheneinrichtung 11 ist weiterhin so eingerichtet, dass basierend auf den Messsignalen, die in den mehreren an dem Testkörper durchgeführten Messzyklen erfasst werden, ein Parameter oder mehrere Parameter des Messzyklus automatisch festgelegt werden.

Während Verfahren nach verschiedenen Ausführungsbeispielen unter Bezugnahme auf die Vorrichtung 1 von Fig. 1 beschrieben wurden, können bei weiteren Ausführungsbeispielen auch andere Ausgestaltungen der Vorrichtung zur Dichtheitsprüfung gewählt werden. Während beispielsweise bei der Vorrichtung 1 das Messsignal von dem Absolutdrucksensor 14 erfasst wird, kann eine Sensoreinrichtung alternativ oder zusätzlich auch einen andere Sensor zur Erfassung des Messsignals aufweisen. Beispielsweise kann bei einem weiteren Ausführungsbeispiel eine Vorrichtung zur Dichtheitsprüfung, die zur automatischen Ermittlung wenigstens eines Parameters für die Dichtheitsprüfung eingerichtet ist, eine Sensoreinrichtung aufweisen, die einen Absolutdrucksensor und einen Differenzdrucksensor umfasst. Bei einem weiteren Ausführungsbeispiel kann eine Vorrichtung zur Dichtheitsprüfung, die zur automatischen Ermittlung wenigstens eines Parameters für die Dichtheitsprüfung eingerichtet ist, eine Sensoreinrichtung aufweisen, die einen Absolutdrucksensor und einen Durchflussmesser umfasst. In diesem Fall kann das Messsignal, das zur automatischen Ermittlung der Parameter für die Dichtheitsprüfung herangezogen wird, ein Ausgangssignal des Absolutdrucksensors in Kombination mit einem Ausgangssignal des Differenzdrucksensors bzw. ein Ausgangssignal des Absolutdrucksensors in Kombination mit einem Ausgangssignal des Durchflussmessers beinhalten.

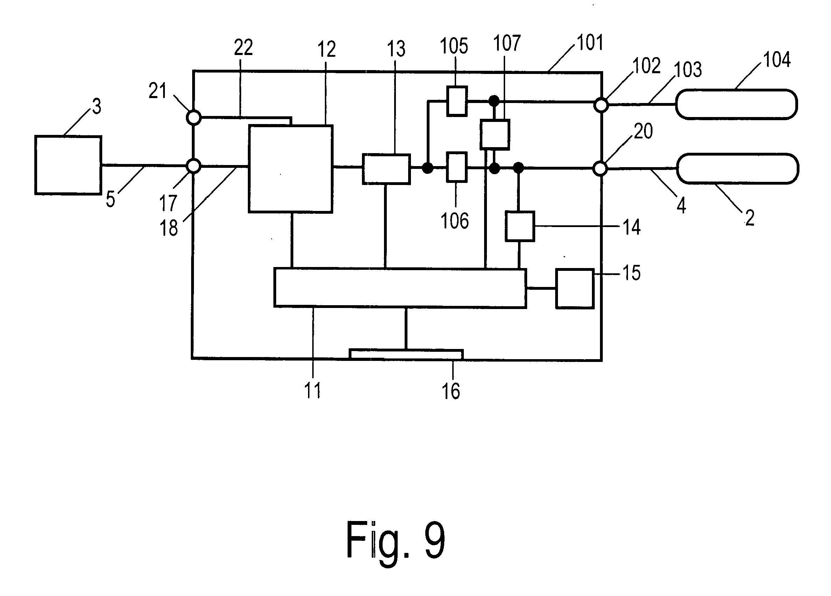

Fig. 9 zeigt eine Vorrichtung 101 zur Dichtheitsprüfung nach einem weiteren Ausführungsbeispiel, die zur automatischen Ermittlung wenigstens eines Parameters für die Dichtheitsprüfung eingerichtet ist. Elemente der Vorrichtung 101, die in ihrer Ausgestaltung und Funktion Elementen der unter Bezugnahme auf Fig. 1 beschriebenen Vorrichtung 1 entsprechen, sind in Fig. 9 mit denselben Bezugszeichen bezeichnet und werden nicht erneut beschrieben. Nachfolgend werden die Unterschiede der Vorrichtung 101 zur Vorrichtung 1 näher erläutert.

Die Vorrichtung 101 weist zusätzlich zu dem mit dem Prüfling oder Testkörper 2 zu koppelnden Anschluss 20 einen mit einem Referenzvolumen 104, beispielsweise über eine Leitung 103, zu koppelnden Anschluss 102 auf. Sowohl der Anschluss 20 als auch der Anschluss 102 sind über das Absperrventil 13 mit dem Druckregler 12 gekoppelt. Stromabwärts einer Verzweigung von zu den Anschlüssen 20 und 102 führenden Leitungen ist in der zu dem Anschluss 20 führenden Leitung ein weiteres Absperrventil oder Trennventil 106 und in der zu dem Anschluss 102 führenden Leitung ein weiteres Absperrventil oder Trennventil 105 vorgesehen. Die weiteren Absperrventile 105 und 106 sind mit der Recheneinrichtung gekoppelt und von dieser ansteuerbar. Stromabwärts der weiteren Absperrventile 105 und 106 ist ein weiterer Sensor 107 vorgesehen, der mit dem Anschluss 20 für den Prüfling bzw. Testkörper 2 und mit dem Anschluss 102 für das Referenzvolumen gekoppelt ist. Der weitere Sensor 107 stellt ein Messsignal an die Recheneinrichtung 11 bereit, das von der Recheneinrichtung 11 ausgewertet wird, um in einer Kalibrierungsphase die automatische Ermittlung von Parametern für eine Dichtheitsprüfung zu ermöglichen bzw. bei einer Dichtheitsprüfung die Leckrate des Prüflings zu ermitteln.

Bei der Vorrichtung 101 weist die Sensoreinrichtung zusätzlich zu dem Absolutdrucksensor 14 den weiteren Sensor 107 auf. Bei einer Ausgestaltung kann der weitere Sensor 107 ein Differenzdrucksensor sein. Bei noch einer weiteren Ausgestaltung kann der weitere Sensor 107 ein Durchflussmesser sein.

Ein Messzyklus bei der Vorrichtung 101 kann im Wesentlichen wie der unter Bezugnahme auf Fig. 2 erläuterte Messzyklus 30 durchgeführt werden. Die Absperrventile 105 und 106 können dabei zeitlich versetzt zum Absperrventil 13 geschlossen werden. Beispielsweise kann das Absperrventil 13 zur Zeit T2 geschlossen werden, während die Absperrventile 105 und 106 zur Zeit (T2+T3)/2 geschlossen werden.

Die Recheneinrichtung 11 der Vorrichtung 101 ist eingerichtet, um einen oder mehrere Parameter für die Dichtheitsprüfung automatisch zu ermitteln. Dazu kann die Recheneinrichtung 11 den Druckregler 12, das Absperrventil 13 und die Absperrventile 105 und 106 so ansteuern, dass mehrere Messzyklen an dem Testkörper 2 durchgeführt werden. Die Ansteuerung erfolgt gemäß einem Zeitablaufplan, wobei Zeitdauern verschiedener Abschnitte des Messzyklus, wie die in Fig. 2 dargestellten Zeiten T1 und T2, und/oder ein Sollwert pf für die Druckbeaufschlagung durch den Druckregler 12, zwischen Messzyklen verändert werden können.

Die Recheneinrichtung 11 empfängt ein Messsignal, das ein Ausgangssignal des Absolutdrucksensors 14 und ein Ausgangssignal des weiteren Sensors 107 umfasst. Basierend auf diesen Ausgangssignalen können ein oder mehrere Parameter für die Dichtheitsprüfung, wie die Zeiten T1, T2, T3 und T4 und der Solldruck pf bei der anfänglichen Druckbeaufschlagung, von der Recheneinrichtung 11 festgelegt werden. Die Recheneinrichtung 11 kann diese Parameter im Wesentlichen unter Verwendung des unter Bezugnahme auf Fig. 4-8 beschriebenen Verfahrens festlegen. Dabei können die Kriterien zur Festlegung eines akzeptablen Parametersatzes auf dem Ausgangssignal des Absolutdrucksensors 14 und dem Ausgangssignal des weiteren Sensors 107 beruhen. Beispielsweise können die Kriterien beinhalten, dass das Ausgangssignal des Absolutdrucksensors 14 zu den Zeiten T1 bzw. T2 jeweils um weniger als eine zulässige Maximalabweichung von den Sollwerten pf bzw. pt abweicht, und dass ein Ausgangssignal des weiteren Sensors 107 zur Zeit Tmax um weniger als eine zulässige Maximalabweichung von einem für einen dichten Testkörper erwarteten Signal abweicht, beispielsweise von einem Signal mit dem Wert 0, falls der weitere Sensor 107 ein Differenzdrucksensor oder ein Durchflussmesser ist. Weiterhin können die Kriterien beinhalten, dass eine Änderung des Ausgangssignals des weiteren Sensors 107 zur Zeit Tmax zwischen zwei Messzyklen, zwischen denen der Wert eines der Parameter, wie pf, geändert wurde, bezogen auf die Änderung des Parameterwerts kleiner als eine zulässige Maximalabweichung ist.

Je nach Ausgestaltung des weiteren Sensors 107 können bei den unter Bezugnahme auf Fig. 4-8 beschriebenen Verfahrensschritten Abwandlungen vorgenommen werden, um den oder die Parameter für die Dichtheitsprüfung automatisch zu ermitteln. Falls beispielsweise der weitere Sensor 107 ein Durchflussmesser ist, wird nach Abklingen transienter Phänomene ein im Wesentlichen konstanter Durchfluss durch den Durchflussmesser erwartet. Zur Festlegung der Grenzen T3 und T4 des Messabschnitts können mehrere Zeitintervalle durch eine Bewertungsfunktion bewertet werden, die ein Rauschen des Messsignals um einen besten Fit mit einer konstanten Fitfunktion quantifiziert.

Falls das Ausgangssignal eines Durchflussmessers zu verschiedenen Zeiten $t_i = T2 + (i-1) \cdot \Delta t$ mit $q_i$ bezeichnet wird, kann zum Festlegen der Grenzen des Messabschnitts für mehrere Zeitintervalle jeweils ein Fit an eine konstante Funktion gemäß

$$q_i = B \qquad (7)$$

vorgenommen werden. Ein Rauschterm, der eine mittlere quadratische Abweichung von dem besten Fit an das Messsignal, normiert auf die Zahl N der Messpunkte, in dem Zeitintervall von $\tau_A$ bis $\tau_E$ angibt, ist gegeben durch

$$\sigma_R^2 = \frac{1}{N \cdot (N-1)} \sum_i^N (q_i - B)^2 \approx \frac{1}{N^2} \sum_i^N (q_i - B)^2, \qquad (8)$$

wobei die Näherung in Gleichung (8) für große Werte von N gilt.

Der Einfluss noch vorhandener nichtlinearer Signalkomponenten kann bei der Bewertung der Zeitintervalle berücksichtigt werden, indem eine nichtlineare Funktion, beispielsweise der Form,

$$q(t) = a_0 \cdot \exp(a_1 \cdot t) + a_2 \qquad (9)$$

an das Messsignal für $T2 \le t \le Tmax$ angefittet und bei $\tau_A$ und $\tau_E$ ausgewertet wird.

Während Vorrichtungen und Verfahren zum automatischen Ermitteln wenigstens eines Parameters für eine Dichtheitsprüfung nach verschiedenen Ausführungsbeispielen beschrieben wurden, können in weiteren Ausführungsbeispielen weitere Abwandlungen der beschriebenen Vorrichtungen und Verfahren realisiert werden. Beispielsweise wurden Vorrichtungen und Verfahren nach verschiedenen Ausführungsbeispielen unter Bezugnahme auf einen Messzyklus beschrieben, in dem ein Prüfling bzw. Testkörper zunächst mit Überdruck beaufschlagt und anschließend ein Druckabfall erfasst wird, um die Leckrate zu ermitteln. Bei weiteren Ausführungsbeispielen kann der Prüfling bzw. Testkörper mit Unterdruck beaufschlagt und anschließend ein Druckanstieg erfasst werden. Während bei einigen der beschriebenen Ausführungsbeispielen die Parameter des Messzyklus sequentiell variiert und festgelegt werden, kann der Messzyklus durch gleichzeitige Anpassung mehrerer Parameter einem mehrdimensionalen Optimierungsverfahren im Hinblick auf benutzerdefinierte Gütekriterien an die ermittelte Leckrate unterzogen werden.

Die Vorrichtungen und Verfahren nach verschiedenen Ausführungsbeispielen der Erfindung erlauben eine Dichtheitsprüfung, bei der durch das Dichtheitsprüfgerät ein Parameter oder mehrere Parameter für den Ablauf eines Messzyklus automatisch ermittelbar ist bzw. sind. Bei dem Dichtheitsprüfgerät handelt es sich vorteilhaft um eine tragbare Vorrichtung. Die Vorrichtungen und Verfahren können zur Dichtheitsprüfung in beliebigen Anwendungen eingesetzt werden, wobei die Dichtheitsprüfung in der industriellen Fertigung ein beispielhaftes Anwendungsfeld ist.

**Patentansprüche**

1. Verfahren zum automatischen Ermitteln wenigstens eines Parameters für eine Dichtheitsprüfung, bei der in einem Messzyklus (30) ein Prüfling mit Druck beaufschlagt und ein einen Istdruck oder eine Änderung des Istdrucks in dem Prüfling repräsentierendes Messsignal (36) erfasst wird, wobei der Messzyklus in Abhängigkeit von dem wenigstens einen Parameter (T1, T2, T3, T4, pf) durchgeführt wird,
   wobei das Verfahren umfasst
   Durchführen einer Mehrzahl von Messzyklen an einem Testkörper (2) mit einem Dichtheitsprüfgerät (1; 101), wobei zwischen wenigstens zwei Messzyklen der Mehrzahl von Messzyklen ein Wert eines Parameters (T1, T2, pf) des wenigstens einen Parameters geändert wird, und

Festlegen des wenigstens einen Parameters für die Dichtheitsprüfung (T1, T2, T3, T4, pf) des Prüflings durch das Dichtheitsprüfgerät (1; 101) basierend auf Messsignalen (74, 78), die in der Mehrzahl von Messzyklen erfasst werden.

2. Verfahren nach Anspruch 1,
   wobei zum Festlegen des wenigstens einen Parameters (T1, T2, T3, T4, pf) eine Differenz (75, 76) zwischen einem Messsignal (74), das in einem Messzyklus der Mehrzahl von Messzyklen erfasst wird, und einem Sollwert (pt) mit einer Maximalabweichung verglichen wird, und/oder eine Differenz (79) zwischen zwei Messsignalen (74, 78), die in den wenigstens zwei Messzyklen erfasst werden, mit einer Maximalabweichung verglichen wird,
   wobei die Maximalabweichung vorgebbar, insbesondere benutzerdefiniert vorgebbar ist.

3. Verfahren nach Anspruch 1 oder 2,
   wobei der Messzyklus eine erste Phase (31, 32; 71, 72), in der eine Druckbeaufschlagung durch eine Druckquelle (3) erfolgt, und eine zweite Phase (34, 35; 73), in der eine Fluidverbindung zu der Druckquelle (3) abgesperrt ist, umfasst,
   wobei der wenigstens eine Parameter eine Dauer der ersten Phase (T2) und/oder einen während der ersten Phase eingestellten Druck (pf) umfasst.

4. Verfahren nach Anspruch 3,
   wobei der wenigstens eine Parameter (pf) derart festgelegt wird, dass ein in einem Messzyklus, der mit dem festgelegten wenigstens einen Parameter durchgeführt wird, erfasstes Messsignal in der zweiten Phase (34, 35; 73) stabil gegenüber Änderungen des wenigstens einen Parameters (pf) ist.

5. Verfahren nach Anspruch 3 oder 4,
   wobei der wenigstens eine Parameter (T1, T2, pf) derart festgelegt wird, dass ein in einem Messzyklus, der mit dem festgelegten wenigstens einen Parameter durchgeführt wird, am Ende der ersten Phase (31, 32; 71, 72) eingestellter Druck innerhalb einer vorgebbaren Maximalabweichung mit einem vorgebbaren Prüfdruck (pt) übereinstimmt.

6. Verfahren nach einem der Ansprüche 3-5,
   wobei der wenigstens eine Parameter (T1, T2, pf) derart festgelegt wird, dass in einem Messzyklus, der mit dem festgelegten wenigstens einen Parameter durchgeführt wird, für einen Testkörper (2) mit bekannter Leckrate das Messsignal in der zweiten Phase (34, 35; 73) mit einem für die bekannte Leckrate erwarteten Messsignal innerhalb einer vorgebbaren Maximalabweichung übereinstimmt.

7. Verfahren nach einem der Ansprüche 3-6,
   wobei die erste Phase einen ersten Abschnitt (31, 71), in dem eine Druckbeaufschlagung mit einem ersten Solldruck (pf) erfolgt, und einen zweiten Abschnitt (32, 72), in dem die Druckbeaufschlagung von dem ersten Solldruck (pf) zu einem Soll-Prüfdruck (pt) geändert wird, umfasst,
   wobei der wenigstens eine Parameter ausgewählt ist aus einer Gruppe umfassend den ersten Solldruck (pf), eine Dauer (T1) des ersten Abschnitts und eine Dauer des zweiten Abschnitts.

8. Verfahren nach einem der Ansprüche 3-7,
   wobei der wenigstens eine Parameter eine Anfangszeit (T3) und/oder eine Endzeit (T4) eines Messabschnitts (34) in der zweiten Phase (34, 35) umfasst.

9. Verfahren nach Anspruch 8,
   wobei zum Festlegen der Anfangszeit (T3) und/oder der Endzeit (T4) des Messabschnitts (34) eine Messunsicherheit eines Messsignals (74, 78; 91), das in einem Messzyklus der Mehrzahl von Messzyklen erfasst wird, für mehrere Zeitintervalle (92) ermittelt wird.

10. Verfahren nach Anspruch 9,
    wobei die Anfangszeit (T3) und die Endzeit (T4) des Messabschnitts (34) so gewählt werden, dass die Endzeit (T4) unter der Zwangsbedingung, dass die Messunsicherheit kleiner als ein vorgebbarer Maximalwert ist, minimiert wird.

11. Verfahren nach einem der Ansprüche 9 oder 10,
    wobei die Messunsicherheit für ein Zeitintervall (92) der mehreren Zeitintervalle jeweils basierend auf einer mittleren quadratischen Abweichung des Messsignals von einem besten linearen Fit an das Messsignal und basierend auf einem nichtlinearen Fit (93) an das Messsignal bestimmt wird.

**12.** Verfahren zur Dichtheitsprüfung einer Mehrzahl von Prüflingen, umfassend

automatisches Ermitteln wenigstens eines Parameters (T1, T2, T3, T4, pf) für die Dichtheitsprüfung unter Verwendung des Verfahrens nach einem der Ansprüche 1-11, und

Durchführen eines Messzyklus für jeden Prüfling der Mehrzahl von Prüflingen mit den automatisch ermittelten Parametern.

**13.** Verfahren nach Anspruch 12, umfassend

Auswählen eines Testkörpers (2), der eine zu der Mehrzahl von Prüflingen identische Ausgestaltung und eine bekannte, insbesondere möglichst geringe Leckrate aufweist,

wobei das Verfahren zum automatischen Ermitteln des wenigstens einen Parameters mit dem Testkörper (2) durchgeführt wird.

**14.** Vorrichtung zur Dichtheitsprüfung, umfassend

eine Druckkontrolleinrichtung (12, 13; 12, 13, 105, 106), mit der eine Druckbeaufschlagung eines Prüflings steuerbar oder regelbar ist,

eine Sensoreinrichtung (14; 14, 107), mit der ein einen Istdruck oder eine Änderung des Istdrucks in dem Prüfling repräsentierendes Messsignal (74, 78) erfassbar ist, und

eine Recheneinrichtung (11), die mit der Druckkontrolleinrichtung (12, 13; 12, 13, 105, 106) gekoppelt und eingerichtet ist, um die Druckkontrolleinrichtung (12, 13; 12, 13, 105, 106) gemäß einem von wenigstens einem Parameter (T1, T2, T3, T4, pf) abhängigen Messzyklus anzusteuern,

wobei die Recheneinrichtung (11) mit der Sensoreinrichtung (14; 14, 107) gekoppelt ist, um das während des Messzyklus erfasste Messsignal (60) auszuwerten und basierend auf dem erfassten Messsignal (60) einen Wert eines Parameters des wenigstens einen Parameters (T1, T2, T3, T4, pf) zu ändern, und um die Druckkontrolleinrichtung (12, 13; 12, 13, 105, 106) zur Durchführung eines weiteren Messzyklus mit dem geänderten Parameter anzusteuern, um automatisch wenigstens einen Parameter (T1, T2, T3, T4, pf) für eine Dichtheitsprüfung festzulegen.

**15.** Vorrichtung nach Anspruch 14,

wobei die Vorrichtung (1; 101) zur Durchführung des Verfahrens nach einem der Ansprüche 1-11 eingerichtet ist.

Fig. 1

EP 2 177 889 A1

Fig. 2

40

Auswählen Testkörper — 41

automatisches Ermitteln wenigstens eines Parameters — 42

Durchführen einer Dichtheitsprüfung für eine Mehrzahl von Prüflingen unter Verwendung des wenigstens einen Parameters — 43

# Fig. 3

Fig. 4

Fig. 5

Fig. 6

80

$$\text{Auslesen } p_i \quad \text{— 81}$$

$$\text{nichtlinearer Fit an } (t_i, p_i) \quad \text{— 82}$$

$$\tau_E = T2 + \Delta t \quad \text{— 83}$$

$$\text{Bestimme } \sigma(\tau_A, \tau_E) \text{ für } T2 \le \tau_A < \tau_E \quad \text{— 84}$$

$$\text{Bestimme } \tau_{A0}, \text{ so dass } \sigma(\tau_A, \tau_E) \text{ minimal wird für aktuelles } \tau_E \quad \text{— 85}$$

86

$$\sigma(\tau_{A0}, \tau_E) < \varepsilon_M?$$

ja

87

$$T3 = \tau_{A0}, \ T4 = \tau_E$$

nein

88

$$\tau_E = \tau_E + \Delta t$$

89

$$\tau_E \ge Tmax?$$

nein

ja

# Fig. 7

Fig. 8

Fig. 9

**EUROPÄISCHER RECHERCHENBERICHT**

Europäisches
Patentamt

European
Patent Office

Office européen
des brevets

**Nummer der Anmeldung**

EP 08 01 8147

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 585 128 A (TRACE [FR]) 23. Januar 1987 (1987-01-23) | 1-11,14, 15 | INV. G01M3/32 |
| Y | * Seite 2, Zeile 17 - Seite 8, Zeile 35; Abbildungen 1-3 * | 12,13 | |
| | ----- | | |
| Y | EP 0 303 303 A (PRODUCT SUPPLIERS AG [CH]) 15. Februar 1989 (1989-02-15) * Spalte 6, Zeile 36 - Spalte 7, Zeile 2; Abbildungen 6,7 * | 12,13 | |
| | ----- | | |
| X | US 6 182 501 B1 (FURUSE AKIO [JP] ET AL) 6. Februar 2001 (2001-02-06) * Spalte 5, Zeile 62 - Spalte 16, Zeile 32; Abbildungen 4-17 * | 1-11,14, 15 | |
| | ----- | | |
| X | WO 2007/136109 A (COSMO INSTR CO LTD [JP]; FURUSE AKIO [JP]) 29. November 2007 (2007-11-29) * Zusammenfassung * | 1-15 | |
| X | & EP 2 023 114 A (COSMO INSTR CO LTD [JP]) 11. Februar 2009 (2009-02-11) * Absatz [0013] - Absatz [0048]; Abbildungen 1-7 * | 1-15 | RECHERCHIERTE SACHGEBIETE (IPC)<br><br>G01M |
| | ----- | | |
| X | US 5 367 797 A (ZAIM ADIL Z [US]) 29. November 1994 (1994-11-29) * Spalte 2, Zeile 21 - Spalte 3, Zeile 37; Abbildungen 1-3 * | 1-11,14, 15 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 12. März 2009 | Gruss, Christian |

**ANHANG ZUM EUROPÄISCHEN RECHERCHENBERICHT
ÜBER DIE EUROPÄISCHE PATENTANMELDUNG NR.**                    EP 08 01 8147

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2009

| Im Recherchenbericht angeführtes Patentdokument | | Datum der Veröffentlichung | Mitglied(er) der Patentfamilie | | Datum der Veröffentlichung |
|---|---|---|---|---|---|
| FR 2585128 | A | 23-01-1987 | KEINE | | |
| EP 0303303 | A | 15-02-1989 | CA | 1333530 C | 20-12-1994 |
| | | | JP | 1118734 A | 11-05-1989 |
| | | | NL | 8701397 A | 16-01-1989 |
| | | | US | 4845977 A | 11-07-1989 |
| US 6182501 | B1 | 06-02-2001 | JP | 11118657 A | 30-04-1999 |
| WO 2007136109 | A | 29-11-2007 | EP | 2023114 A1 | 11-02-2009 |
| | | | KR | 20080108544 A | 15-12-2008 |
| EP 2023114 | A | 11-02-2009 | WO | 2007136109 A1 | 29-11-2007 |
| | | | KR | 20080108544 A | 15-12-2008 |
| US 5367797 | A | 29-11-1994 | KEINE | | |

EPO FORM P0461

Für nähere Einzelheiten zu diesem Anhang : siehe Amtsblatt des Europäischen Patentamts, Nr.12/82